(19) Europäisches Patentamt
European Patent Office
Office européen des brevets

(11) Publication number: 0 132 288
B1

(12) # EUROPEAN PATENT SPECIFICATION

(45) Date of publication of patent specification: 28.02.90

(51) Int. Cl.[5]: C 08 F 10/00, C 08 F 4/64

(21) Application number: 84304043.7

(22) Date of filing: 15.06.84

(54) ## A method of polymerizing an olefin.

(30) Priority: 21.06.83 JP 110110/83
21.06.83 JP 110111/83

(43) Date of publication of application:
30.01.85 Bulletin 85/05

(45) Publication of the grant of the patent:
28.02.90 Bulletin 90/09

(84) Designated Contracting States:
BE DE FR GB IT

(56) References cited:
EP-A-0 014 523
EP-A-0 015 048
EP-A-0 052 471
EP-A-0 058 549
FR-A-2 418 242
GB-A-2 016 486
GB-A-2 056 998
US-A-4 252 670

(73) Proprietor: Asahi Kasei Kogyo Kabushiki Kaisha
2-6, Dojimahama 1-chome Kita-ku
Osaka-shi Osaka 530 (JP)

(72) Inventor: Takaya, Katsuhiko
23-45, Kitase 5-chome
Kurashiki-shi Okayama-ken (JP)
Inventor: Furusato, Masayasu
517, Shijuuse
Kurashiki-shi Okayama-ken (JP)
Inventor: Abe, Kimihiro
1005-1, Higashitomii
Kurashiki-shi Okayama-ken (JP)

(74) Representative: Blake, John Henry Francis et al
BROOKES AND MARTIN High Holborn House
52/54 High Holborn
London WC1V 6SE (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a method of polymerizing an olefin using a novel catalyst. More particularly, the present invention is concerned with a method of polymerizing an olefin in which use is made of a catalyst component made from an organomagnesium component, a silicon compound containing an H-Si-Cl bond, an electron donor and a transition metal compound, together with an organometallic compound.

As the catalyst for polymerizing an olefin, there are well known the so-called Ziegler-Natta catalysts of the system comprising a compound of a transition metal belonging to Group IV to VIA of the Periodic Table and an organometallic compound of a metal belonging to Group I to III of the Periodic Table. On the other hand, in recent years, as the highly active catalysts for polymerization of an olefin, there have been proposed catalysts comprising an inorganic magnesium compound and a titanium or vanadium compound, and those comprising the above-mentioned components and an electron donor (see, for example, Polymer Letters, Vol. 3, p 855 and U.S.P. 3,238,146). Further, there have also been proposed catalysts comprising an organomagnesium compound and a titanium or vanadium compound, and those comprising the above-mentioned components and an electron donor. With respect to the catalyst comprising an organomagnesium compound, various catalysts are known. For example, in British Patent No. 1,235,062, there is disclosed a process for the preparation of alkene polymers by polymerization of one or more alkenes, in which polymerization is effected at a temperature above 110°C using a catalyst obtained by mixing an aluminum-halogen compound, a titanium compound and an organomagnesium compound. In this process, an activator selected from the group consisting of an alkanol, an alkenol, an alkanolate, an alkenolate, a carboxylic acid, an ester or a salt thereof, an aldehyde and a ketone is incorporated in the catalyst during and/or after the preparation and/or the mixing of the catalyst components.

Various catalysts are also proposed in U.S.P. 4,071,674, U.S.P. 3,642,746, Japanese Patent Application Laid-Open Specification No. 50-95382/1975, Japanese Patent Application Laid-Open Specification Nos. 55-58207/1980, 57-205407/1982 and 57-205409/1982.

However, any of the above described conventional catalysts can hardly be used in the industrial-scale polymerization of an olefin, since they are insufficient in catalytic activity.

Illustratively stated, with respect to the above-mentioned conventional catalysts, due to the insufficiency in catalytic activity, it is required to use a large amount of the catalyst. This leads to such a disadvantage that the homopolymers or copolymers produced using these catalysts tend to contain the catalyst in large quantity, thereby causing such problems that the properties of the formed homo-or co-polymers are impaired and that the equipments used for the polymerization or for the molding of the polymer undergo serious troubles such as corrosion due to the remaining catalyst. In order to minimize such troubles, it is required to remove such catalyst residue from the formed polymer, but such removal requires troublesome and time-consuming procedures.

On the other hand, in U.S. Patent Nos. 4,159,965, 4,159,256, 4,115,319 and 4,159,963, there is proposed a catalyst useful for the polymerization of an olefin, which comprises a solid material obtained by reacting an organomagnesium compound with a chlorosilane compound containing a Si-H-Cl bond.

Especially, in U.S. Patent No. 4,159,963, there is disclosed a catalyst comprising a solid catalyst component which is obtained by a method comprising reacting an organomagnesium component with a chlorosilane compound containing a Si-H bond, thereby to obtain a solid material, followed by reacting the so-obtained solid material with a titanium compound containing at least one halogen atom, and a carboxylic acid or a derivative thereof.

The catalyst of the kind as mentioned above exhibits an excellent catalytic activity as compared with the conventional catalysts as mentioned before, and, hence, the yield of a polymer per unit weight of the catalyst is high, causing the removal of the catalyst residue from the formed polymer to be substantially unnecessary. However, the use of the above-mentioned catalyst in the commercial-scale polymerization of an olefin is still defective. Especially, in the case of the above-mentioned catalyst, there can hardly be obtained polymer particles having a high bulk density. In the commercial-scale polymerization of an olefin, it is important to produce polymer particles having a high bulk density. In the case of a polymer having a high bulk density, the amount of the polymer produced per unit time is much larger than in the case of the polymer having a low bulk density, and, hence, there can be attained an increase in the productivity. Further, a polymer having a high bulk density can be packed in a container in an amount larger than a polymer having a low bulk density, and, therefore, in the case of the transportation of such a polymer having a high bulk density, it is not required to use a large number of containers, thus leading to reduction in cost for the shipment or the transportation.

As is apparent from the above, the production of a polymer having a high bulk density is an important requirement in view of the increase in productivity and the reduction of the cost involved in the shipment or the transportation of the polymer.

For the reasons as stated above, it is earnestly demanded in the art to develop a catalyst which is not only excellent in catalytic activity but also capable of producing a polymer having a high bulk density.

EP—A—58549 discloses the formation of a catalyst by the reaction of a magnesium organic compound with a halogenating agent, e.g. a silicon chloro-hydride to form a solid material. Said material may then be treated with an electron donor and further reacted with one or more transition metal compounds, e.g.

titanium, titanium and vanadium and also titanium and zirconium in the presence of an organometallic compound of a group I—III metal.

We have developed the present invention to provide a method of polymerizing an olefin in the presence of a catalyst, which is capable of producing, with a high catalytic efficiency, a homopolymer or a copolymer of an olefin with excellent properties.

The present invention is concerned with method of polymerizing an olefin which comprises contacting an olefin with a catalyst comprising a solid catalyst component (A) and an organometallic compound component (B),

said solid catalyst component (A) being one obtained by a process comprising the steps of:

(I) reacting one mole of a component (i) with 0.01 to 100 moles of a chlorosilane compound (ii) containing an H-Si bond and represented by the general formula:

$$H_aSiCl_bR^{10}_{4-(a+b)}$$

wherein

$0<a\leqq 2$;

b is a number greater than 0;

$a+b\leqq 4$; and

$R^{10}$ is a hydrocarbon residue having 1 to 10 carbon atoms,

to form a solid (1) containing a C-Mg bond;

said component (i) being one selected from the group consisting of:

an organomagnesium component (a) represented by the general formula:

$$M_\alpha Mg_\beta R^1_p R^2_q X_r Y_s$$

wherein

M is at least one metal selected from the group consisting of Al, Zn, B, Be and Li;

$R^1$ and $R^2$ each independently represent a hydrocarbon residue having 1 to 10 carbon atoms;

X and Y each independently represent a group selected from $OR^3$, $OSiR^4R^5R^6$, $NR^7R^8$, $SR^9$ and halogen, wherein $R^3$, $R^4$, $R^5$, $R^6$, $R^7$ and $R^8$ each independently represent a hydrogen atom or a hydrocarbon residue having 1 to 10 carbon atoms, and $R^9$ is a hydrocarbon residue having 1 to 10 carbon atoms;

α is 0 or a number greater than 0;

β is a number greater than 0; and

p, q, r and s each are 0 or a number greater than 0 and satisfying the following relationships:

$$p+q+r+s=m\alpha+2\beta$$

and

$$0\leqq(r+s)/(\alpha+\beta)\leqq 1,$$

wherein

m is a valency of M, provided that α, p, q, r and s are not simultaneously 0; and a component (b) obtained by reacting an organomagnesium component (a) as defined above with at least one electron donor selected from the group consisting of an ether, a thioether, a ketone, an aldehyde, a carboxylic acid and a derivative thereof, an alcohol, a thioalcohol and an amine;

(II) reacting said solid (1) with at least one electron-donative compound (III) thereby to form a solid (2), said compound (iii) being employed in an amount of 0.05 to 20 moles per mole of the C-Mg bond contained in said solid (1); and

(III) reacting said solid (2) with at least one member (iv) selected from the group consisting of a titanium compound, a vanadium compound, a zirconium compound, a hafnium compound, reaction products obtained by the reaction therebetween, and mixtures thereof in the presence of an organometallic compound (vi) of at least one metal belonging to groups I, II or III of the Periodic Table component thereby to obtain a solid catalyst component (A).

The present invention is characterised in that the electron donative compound (iii) is selected from an aldehyde, a silanol, a hydrosiloxane, an alcohol and a thioalcohol.

The method of the present invention has the following advantages:

(1) The catalyst employed in the method of the present invention exhibits a high catalytic activity (comparable to that of a catalyst disclosed in US Patent No. 4,159,963). Therefore, by the present invention, there can be attained an extremely high catalytic efficiency. The term "catalytic efficiency" as used herein is intended to mean the yield of a polymer per unit weight of a catalyst or per unit weight of a transition metal contained in the catalyst.

In Example 1-[1] which will be given later, there is obtained a catalytic efficiency as high as 1,670 kg—polyethylene/g—titanium.

(2) According to the method of the present invention, there can be obtained polymer particles having a high bulk density. In the suspension polymerization performed in Example 1-[4] which will be mentioned later, there are obtained polymer particles having a bulk density as high as 0.48 g/cm$^3$.

(3) According to the method of the present invention, there can be attained a high copolymerization effect. The term "copolymerization effect" as employed herein is intended to mean such an effect that

when, for example, ethylene is copolymerized with another kind of α-olefin, it is possible to produce a copolymer having a low density (a copolymer having a low density is valuable in some applications) by using only a small amount of the α-olefin. Due to such effect, the amount of the α-olefin to be consumed can be economized.

(4) According to the method of the present invention, it is possible to produce a homopolymer or a copolymer having an excellent color.

Now, an explanation will be made with respect to the catalyst to be employed in the method of the present invention.

According to the present invention, the catalyst to be employed for the polymerization of an olefin comprises a solid catalyst component (A) and an organometallic compound component (B). The method of preparing the solid catalyst component (A) will now be firstly explained.

The solid catalyst component (A) is produced by a process comprising the steps of: (I) reacting a component (i) with a chlorosilane compound (ii) to obtain a solid (1); (II) reacting the solid (1) with at least one compound (iii) to obtain a solid (2); and (III) further reacting the solid (2) with at least one member (iv), whereby a solid catalyst component (A) is obtained.

As the component (i) to be reacted with the chlorosilane compound (ii), there is employed an organomagnesium component (a) or a component (b) obtained by reacting an organomagnesium component (a) with at least one electron donor.

The organomagnesium component (a) to be used in the present invention is an organomagnesium compound represented by the general formula:

$$M_\alpha Mg_\beta R^1_p R^2_q X_r Y_s$$

wherein

M is at least one metal selected from the group consisting of Al, Zn, B, Be and Li;

$R^1$ and $R^2$ each independently represent a hydrocarbon residue having 1 to 10 carbon atoms;

X and Y each independently represent a group selected from $OR^3$, $OSiR^4R^5R^6$, $NR^7R^8$, $SR^9$ and halogen, wherein $R^3$, $R^4$, $R^5$, $R^6$, $R^7$ and $R^8$ each independently represent a hydrogen atom or a hydrocarbon residue having 1 to 10 carbon atoms, and $R^9$ is a hydrocarbon residue having 1 to 10 carbon atoms;

α is 0 or a number greater than 0;

β is a number greater than 0; and

p, q, r and s each are 0 or a number greater than 0 and satisfying the following relationships:

$$p+q+r+s=m\alpha+2\beta$$

and

$$0\leqq(r+s)/(\alpha+\beta)\leqq1,$$

wherein

m is a valency of M provided that α, p, q, r and s are not simultaneously 0. Although the organomagnesium component (a) is shown in the form of a complex compound of an organomagnesium in the above formula, according to the present invention, the component (a) may include magnesium compounds of the type $R_2Mg$ (wherein R is a hydrocarbon residue having 1 to 20 carbon atoms) and all of their complexes with other metallic compounds. As the hydrocarbon groups represented by $R^1$ to $R^9$ in the above formula, there may be mentioned alkyl groups, cycloalkyl groups and aryl groups, for example, methyl, ethyl, propyl, butyl, amyl, hexyl, decyl, cyclohexyl or phenyl. It is preferred that $R^1$ be an alkyl group. A hydrogen atom may be selected for $R^3$ to $R^8$. As the halogen, there may be employed fluorine, chlorine, bromine and iodine. Especially preferred is chlorine.

The metal atom M should be selected from the group consisting of aluminum, zinc, boron, berylium and lithium. Preferred are aluminum, zinc, boron and berylium. There is no limitation with respect to the atomic ratio (β/α) of magnesium to the metal M. However, it is preferred that the ratio β/α be in the range of 0 to 10, more preferably 0.5 to 10.

The equation

$$p+q+r+s=m\alpha+2\beta$$

which represents a relationship among α, β, p, q, r and s indicates a stoichiometry between the valency of the metal atom and the substituent. The relationship represented by the inequality

$$0\leqq(r+s)/(\alpha+\beta)\leqq1.0$$

means that the ratio of the sum of X+Y to the sum of metal atoms should be zero or more but not greater than 1.0. The preferred range is

$$0\leqq(r+s)/(\alpha+\beta)<1,$$

more preferred range is

$$0\leqq(r+s)/(\alpha+\beta)\leqq0.8.$$

These organomagnesium compounds or organomagnesium complexes are prepared by reacting an organomagnesium compound represented by the formula RMgQ or $R_2Mg$ (wherein R is as defined above, and Q is a halogen) with an organometallic compound represented by the general formula $MR_m$ or $MR_{m-1}$ H (wherein M, R and m are as defined above in an inert hydrocarbon medium such as hexane, heptane, cyclohexane, benzene and toluene at a temperature in the range of from room temperature to 150°C, and, if necessary, further reacting the resultant with an alcohol, water, a siloxane, an amine, an imine, a mercaptan or a dithiocompound. Alternatively, the organomagnesium compound or organomagnesium complex can be prepared by reacting $MgX_2$ or RMgX with $MR_m$ or $MR_{m-1}$ H, or by reacting RMgX $MgR_2$ with $R_nMX_{m-n}$, or by reacting RMgX or $MgR_2$ with $Y_nMX_{m-n}$ (wherein M, R, X and Y are as defined above, and n is a number from 0 to m).

In this connection, it is generally known that organomagnesium compounds are insoluble in an inert hydrocarbon medium except for those in which α is greater than 0. However, some kinds of organomagnesium compounds such as $(sec\text{-}C_4H_9)_2Mg$ are soluble in a hydrocarbon medium even if α is 0. Such compounds are also usable in the method of the present invention. An explanation will be made below with respect to such organomagnesium compounds.

In the formula $Mg_\beta R^1_p R^2_q X_r Y_s$, it is preferred that $R^1$ and $R^2$ satisfy any of the following requirements (I), (II) and (III).

(I) At least one of $R^1$ and $R^2$ is a secondary or tertiary alkyl group having 4 to 6 carbon atoms. Preferably, both of $R^1$ and $R^2$ are alkyl groups having 4 to 6 carbon atoms, and at least one of $R^1$ and $R^2$ is a secondary or tertiary alkyl group.

(II) $R^1$ and $R^2$ are alkyl groups having different number of carbon atom. Preferably, $R^1$ is an alkyl group having 2 to 3 carbon atoms and $R^2$ is an alkyl group having 4 or more carbon atoms.

(III) At least one of $R^1$ and $R^2$ is a hydrocarbon residue having 6 or more carbon atoms. Preferably, both of $R^1$ and $R^2$ are alkyl groups having 6 or more carbon atoms.

These alkyl groups or hydrocarbon residues will be described below:

With respect to the requirement (I), as the secondary or tertiary alkyl groups having 4 to 6 carbon atoms, there may be mentioned $sec\text{-}C_9H_9$, $tert\text{-}C_4H_9$,

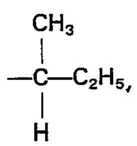 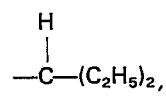 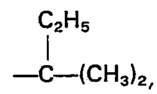 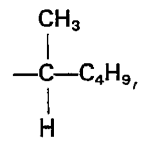

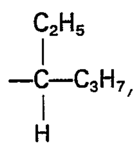 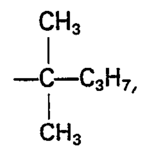 and 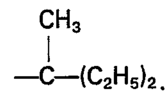

Of them, secondary alkyl groups are preferred, and $sec\text{-}C_4H_9$ is especially preferred.

With respect to the requirement (II), as the alkyl groups having 2 to 3 carbon atoms, there may be mentioned ethyl and propyl groups. Of them, ethyl is especially preferred. As the alkyl groups having 4 or more carbon atoms, there may be mentioned butyl, amyl, hexyl and octyl groups. Of them, butyl and hexyl are especially preferred.

With respect to the requirement (III), as the example of hydrocarbon residues having 6 or more carbon atoms, there may be mentioned hexyl, octyl, decyl and phenyl. Of them, hexyl is especially preferred.

According to the present invention, the organomagnesium compounds to be used are preferably soluble in a hydrocarbon medium, since they are employed in the form of a solution in hydrocarbons. There is generally observed such a tendency that the solubility of an organomagnesium compound is increased if the number of carbon atoms of the alkyl group is increased. However, an increase of the number of carbon atoms of the alkyl group leads to an increase in viscosity of the resulting hydrocarbon solution. Therefore, the use of an alkyl group having too long a carbon chain is disadvantageous, since it causes the resulting hydrocarbon solution to be too viscous, leading to a difficulty in handling.

As mentioned above, the organomagnesium compounds are used in the form of a hydrocarbon solution thereof. As the hydrocarbon solutions, those containing therein a small amount of a complexing agent such as an ether, an ester, or an amine may also be used.

According to the method of the present invention, as the organomagnesium component (a), there may also be employed an organomagnesium halide represented by the formula $M_\alpha Mg_\beta R^1_p R^2_q X_r Y_s$ wherein M, $R^1$, $R^2$ X, Y, p and s are as defined above, α is 0, β=1, q=0 and r=1. These compounds are the so-called Grignard Compounds, and are commonly synthesized by reacting magnesium with an organic halide in an ether solution. It is also known that an organomagnesium halide is synthesized by reacting magnesium with an organic halide in a hydrocarbon medium in the absence of an ether. Both of the above-mentioned methods are applicable for the preparation of such compounds.

As the example of the organomagnesium halide, there may be mentioned compounds such as

methylmagnesium chloride, methylmagnesium bromide, methylmagnesium iodide, ethylmagnesium chloride, ethylmagnesium bromide, ethylmagnesium iodide, n- or iso-propylmagnesium chloride, n- or iso-propylmagnesium bromide, n- or iso-propylmagnesium iodide, n-butylmagnesium chloride, n-butylmagnesium bromide, n-butylmagnesium iodide, iso-, sec- or tert-butylmagnesium chloride, iso-, sec- or tert-butylmagnesium bromide, iso-, sec- or tert-butylmagnesium iodide, n-amylmagnesium chloride, n-amylmagnesium bromide, hexylmagnesium chloride, hexylmagnesium bromide, octylmagnesium chloride, phenylmagnesium chloride and phenylmagnesium bromide, and their complexes with ether compounds. As the ether compounds, there can be mentioned a variety of ether compounds such as dimethyl ether, diethyl ether, diisopropyl ether, dibutyl ether, diallyl ether, tetrahydrofuran, dioxane and anisole.

According to the method of the present invention, as the component (i), there may be alternatively be employed a component (b) obtained by reacting an organomagnesium component (a) with at least one electron donor. As the electron donor to be reacted with the component (a), there may be mentioned at least one member selected from an ether, a thioether, a ketone, an aldehyde, a carboxylic acid or a derivative thereof, an alcohol, a thioalcohol and an amine.

As examples of the ether, there may be mentioned ether of the formula ROR' in which R and R' each independently are aliphatic, aromatic or alicyclic hydrocarbon residues, for example, methyl, ethyl, propyl, butyl, amyl, hexyl, decyl, octyl, dodecyl, cyclohexyl, phenyl and benzyl.

As examples of the thioether, there may be mentioned thioethers of the formula R''SR''' in which R'' and R''' each independently are aliphatic, aromatic or alicyclic hydrocarbon residues, for example, methyl, ethyl, propyl, butyl, amyl, hexyl, cyclohexyl and phenyl.

As examples of the ketone, there may be mentioned ketones of the formula R''COR''' in which R'' and R''' are as defined above. Preferred are dimethyl ketone and diethyl ketone.

As examples of the aldehyde, there may be mentioned aliphatic aldehydes, aromatic aldehydes and alicyclic aldehydes.

With respect to examples of the carboxylic acid and its derivative, there may be mentioned carboxylic acids, carboxylic acid anhydrides, carboxylic acid esters, carboxylic acid halides, and carboxylic acid amides. As examples of the carboxylic acid, there may be mentioned formic acid, acetic acid, propionic acid, butyric acid, valeric acid, oxalic acid, malonic acid, succinic acid, maleic acid, acrylic acid, benzoic acid, toluic acid and terephthalic acid.

As examples of the carboxylic acid anhydrides, there may be mentioned acetic anhyride, propionic anhydride, butyric anhydride, succinic anhydride, maleic anhydride, benzoic anhydride and phthalic anhydride. As examples of the carboxylic acid esters, there may be mentioned methyl formate, ethyl formate, methyl acetate, ethyl acetate, propyl acetate, methyl propionate, ethyl propionate, propyl propionate, butyl propionate, ethyl butyrate, ethyl valerate, ethyl caproate, ethyl n-heptanoate, dibutyl oxalate, ethyl succinate, ethyl malonate, dibutyl maleate, methyl acrylate, ethyl acrylate, methyl methacrylate, methyl benzoate, ethyl benzoate, propyl benzoate, butyl benzoate, methyl toluylate, ethyl toluylate, propyl toluylate, butyl toluylate, amyl toluylate, methyl p-ethylbenzoate, ethyl p-ethylbenzoate, methyl anisate, ethyl anisate, propyl anisate, butyl anisate, methyl p-ethoxybenzoate and ethyl p-ethoxybenzoate. As examples of the carboxylic acid halides, carboxylic acid chlorides are preferred. As examples of the carboxylic acid chlorides, there may be mentioned acetyl chloride, propionyl chloride, butyryl chloride, succinyl chloride, benzoyl chloride and toluyl chloride. As examples of the carboxylic acid amides, there may be mentioned dimethylformamide, dimethylacetamide and dimethylpropionamide.

As examples of the alcohols, there may be mentioned methyl alcohol, ethyl alcohol, propyl alcohol, butyl alcohol, amyl alcohol, hexyl alcohol, phenol and cresol. Of them, preferred are secondary, tertiary or aromatic alcohols such as sec-propyl alcohol, sec-butyl alcohol, tert-butyl alcohol, sec-amyl alcohol, tert-amyl alcohol, sec-hexyl alcohol, phenol, ortho, meta and para-cresol.

As examples of the thioalcohols, there may be mentioned methyl mercaptan, ethyl mercaptan, propyl mercaptan, butyl mercaptan, amyl mercaptan, hexyl mercaptan and phenyl mercaptan. Of them, secondary, tertiary or aromatic thioalcohols are preferred.

As examples of the amine, there may be mentioned aliphatic, alicyclic and aromatic amines. Of them, secondary or tertiary amines such as trialkylamines, triphenylamine and pyridine are preferred.

The reaction between the organomagnesium component (a) and the above-mentioned electron donor can be carried out in an inert reaction medium, for example an aliphatic hydrocarbon such as hexane and heptane, an aromatic hydrocarbon such as benzene, toluene and xylene, an alicyclic hydrocarbon such as cyclohexane and methylcyclohexane, or a mixture of these hydrocarbons. As the reaction method, there may be mentioned a method in which the electron donor is first added to a reaction zone, followed by addition of the organomagnesium component (method 1); a method in which the organomagnesium component is first added to a reaction zone, followed by addition of the electron donor (method 2); and a method in which the organomagnesium component and the electron donor are simultaneously incorporated into a reaction zone (method 3). Any of the above-mentioned methods 1 to 3 is applicable. With respect to the amount ratio of the electron donor to the organomagnesium component (a), it is preferred that the electron donor be employed in an amount of 1 mole or less, preferably 0.05 to 0.8 mole per mole of the organomagnesium component (a).

An explanation will now be given with respect to the chlorosilane compound containing a Si-H bond

which is represented by the general formula $H_aSiCl_bR^{10}_{4-(a+b)}$ (wherein a, b and $R^{10}$ are as defined above) (Compound (ii)).

As examples of the hydrocarbon residue represented by $R^{10}$ in the above formula, there may be mentioned aliphatic, alicyclic and aromatic hydrocarbon groups such as methyl, ethyl, propyl, butyl, amyl, hexyl, decyl, cyclohexyl and phenyl. Of them, an alkyl group having 1 to 10 carbon atoms is preferred, and a lower alkyl group such as methyl, ethyl or propyl is especially preferred. With respect to the values of a and b, a and b each are a number greater than 0, and satisfy the relationship of $a+b \leqq 4$. The value of a should be greater than 0 but not greater than 2. Preferred range of a is $0.5 \leqq a \leqq 1.5$.

As the examples of such chlorosilane compounds, there may be mentioned $HSiCl_3$, $HSiCl_2CH_3$, $HSiCl_2C_2H_5$, n-$C_3H_7SiHCl_2$, iso-$C_3H_7SiHCl_2$, n-$C_4H_9SiHCl_2$, $C_6H_5SiHCl_2$, 4-$ClC_6H_4SiHCl_2$, $CH_2{=}CHSiHCl_2$, $C_6H_5CH_2SiHCl_2$, iso-$C_{10}H_7SiHCl_2$, $CH_2{=}CHCH_2SiHCl_2$, $CH_3SiH_2Cl$, $C_2H_5SiH_2Cl$, $(CH_3)_2SiHCl$, $(CH_3)$(iso-$C_3H_7$)SiHCl, $(CH_3)(C_6H_5)SiHCl$, $(C_2H_5)_2SiHCl$ and $(C_6H_5)_2SiHCl$. These chlorosilane compounds are used alone or in mixture. Preferred chlorosilane compounds are trichlorosilane, monomethyldichlorosilane, dimethylchlorosilane and ethyldichlorosilane. More preferred are trichlorosilane and monomethyldichlorosilane.

An explanation will now be made with respect to the reaction between a component (i) and a chlorosilane compound (ii). The reaction between a component (i) and a chlorosilane compound (ii) can be carried out in an inert reaction medium, for example, an aliphatic hydrocarbon such as hexane and heptane, an aromatic hydrocarbon such as benzene, toluene and xylene, an alicyclic hydrocarbon such as cyclohexane and methylcyclohexane, or an ether-type medium such as ether and tetrahydrofuran, or in a mixture of those hydrocarbons or ethers. From the viewpoint of the desired performance of the catalyst, an aliphatic hydrocarbon medium is preferred. The reaction can be carried out at a temperature ranging from 20 to 150°C, but, in order to attain a suitable reaction rate, it is preferred that the reaction be carried out at a temperature higher than the boiling point of the chlorosilane, or, at a temperature of 40°C or higher. With respect to the ratio of the component (i) to the chlorosilane compound (ii), the chlorosilane compound (ii) is employed in an amount of 0.01 to 100 moles, preferably 0.1 to 10 moles, more preferably 0.2 to 5 moles per mole of the component (i).

With respect to the method of reacting the component (i) with the chlorosilane compound (ii), there may be mentioned a method in which the component (i) and the chlorosilane compound (ii) are simultaneously introduced in a reaction zone (method a); a method in which the chlorosilane compound (ii) is first introduced into a reaction zone, followed by introduction of the component (i) (method b); and a method in which the component (i) is first introduced into a reaction zone, followed by introduction of the compound (ii) (method c). Of them, the latter two methods, i.e., methods b and c are preferable, particularly method b gives an excellent result.

According to the method of the present invention, the reaction between the component (i) and the chlorosilane compound (ii) may be carried out in the presence of an inorganic carrier. As the inorganic carrier, there may be employed at least one member selected from:

(i) inorganic oxides
(ii) inorganic carbonates, silicates and sulfates
(iii) inorganic hydroxides, and
(iv) double salts, solid solutions and mixtures of (i) to (iii).

As examples of such inorganic carriers, there may be mentioned silica, silica-alumina, alumina, hydrate alumina, magnesia, thoria, titania, zirconia, calcium phosphate, barium sulfate, calcium sulfate, magnesium silicate, magnesium-calcium-aluminum silicate $[(MgCa)O \cdot Al_2O_3.\ 5SiO_2 \cdot nH_2O]$, potassium-aluminum silicate $[K_2O \cdot Al_2O_3 \cdot 6SiO_2]$, mica $[K_2O \cdot 3Al_2O_3\text{-}6SiO_2 \cdot 2H_2O]$, magnesium-ferro silicate $[(MgFe)_2SiO_4]$, aluminum silicate $(Al_2O_3 \cdot SiO_2)$ and calcium carbonate. Of them, silica and silica-alumina are preferred. The specific surface area of the inorganic carrier is preferably 20 $m^2/g$ to 600 $m^2/g$, more preferably 90 $m^2/g$ to 600 $m^2/g$.

An explanation will now be given in regard to the compound (iii) to be reacted with the solid (1) which is obtained by the reaction between the component (i) and the chlorosilane compound (ii).

The solid (1) obtained by reacting the component (i) with the chlorosilane compound (ii) is then reacted with at least one compound selected from the group consisting of an aldehyde, a silanol, a hydrosiloxane, an alcohol and a thioalcohol, whereby a solid (2) is formed.

As the aldehyde, there may be employed aliphatic, alicyclic and aromatic aldehydes. As the example of such aldehyde, there may be mentioned acetoaldehyde, propionaldehyde, butyraldehyde, valeraldehyde, hexaldehyde, octaldehyde, stearaldehyde and benzaldehyde.

As the silanol, there may be employed trimethylsilanol, triethylsilanol, tripropylsilanol, tributylsilanol, triphenylsilanol, chlorosilane hydrolyzates and polysilanols.

As the hydrosiloxane, there may be employed

methylhydrosiloxane 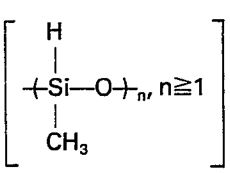 ,

ethylhydrosiloxane 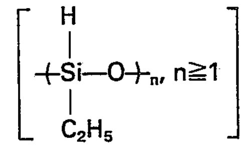 ,

propylhydrosiloxane 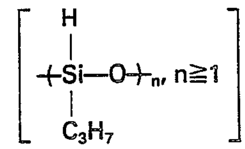 ,

butylhydrosiloxane 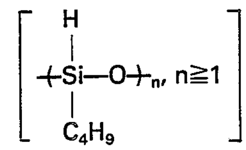 and

phenylhydrosiloxane 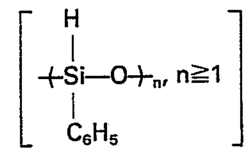 .

As the alcohol and thioalcohol, there may be employed alcohols and thioalcohols which are mentioned with respect to the component (b).

The compound (iii) is used in an amount of 0.05 to 20 moles, preferably 0.1 to 10 moles, more preferably 0.2 to 8 moles per mole of the C-Mg bond contained in the solid (1).

The reaction between the solid (1) and the compound (iii) will now be explained.

The reaction is carried out in the presence or absence of an inert medium. As the inert medium, any of the previously stated aliphatic, aromatic and alicyclic hydrocarbons may be used. With respect to the reaction temperature, there is no particular limitation. However, it is preferred that the reaction be carried out at a temperature of from room temperature to 200°C. To effect the reaction between the solid (1) and the compound (iii), there may be employed a method in which the solid (1) is first incorporated in a reaction zone, followed by addition of the compound (iii) (method I); a method in which the compound (iii) is first incorporated into a reaction zone, followed by addition of the solid (1) and (method II); and a method in which the solid (1) and the compound (iii) are simultaneously incorporated into a reaction zone (method III). Of them the methods I and III are preferred. After completion of the reaction between the solid (1) and the compound (iii), it is possible to subject the resultant to a treatment with Lewis acids such as a dialkylaluminum halide. As examples of such Lewis acids, there may be mentioned a dialkylaluminum halide such as a dialkylaluminum chloride, a dialkylaluminum bromide and a dialkylaluminum iodide; a sesquialkylaluminum halide such as a sesquialkylaluminum chloride, a sesquialkylaluminum bromide and a sesquialkylaluminum iodide, and an alkylaluminum dihalide such as an alkylaluminum dichloride, an alkylaluminum dibromide and an alkylaluminum diiodide. In the above-mentioned Lewis acids, the alkyl moiety may be for instance methyl, ethyl, propyl or butyl.

In the meantime, the reaction between the solid (1) and the compound (iii) is accompanied by a slight decrease of the amount of the hydrocarbon residue in the solid (2) as the reaction product. In order that the catalyst as the end product can exhibit an excellent catalyst performance, it is required that the amount of the hydrocarbon residue in the solid (2) obtained by the reaction between the solid (1) and the compound (iii) be maintained above a certain level. For this purpose, the compound (iii) should be employed in the above-mentioned amount range, namely, 0.05 to 20 moles per mole of the C-Mg bond in the solid (1).

An explanation will be made with respect to the member (iv) which is to be reacted with the solid (2) obtained by the reaction between the solid (1) and the compound (iii). The solid (2) is reacted with at least one member selected from the group consisting of a titanium compound, a vanadium compound, a zirconium compound, a hafnium compound, reaction products obtained by the reaction therebetween, and mixtures thereof, whereby a solid catalyst component (A) is obtained. Preferred examples include halides, oxyhalides, alkoxyhalides and alkoxides of titanium, vanadium, zirconium and hafnium, reaction products obtained by the reaction therebetween, and mixtures thereof.

As the titanium compounds, there may be employed compounds represented by the formula $Ti(OR^{11})_sX_{4-s}$ wherein s is a number in the range of $0 \leqq s \leqq 4$, $R^{11}$ is a hydrocarbon residue having 1 to 20 carbon atoms, and X is a halogen. As examples of the hydrocarbon residue having 1 to 20 carbon atoms, there may be mentioned aliphatic hydrocarbon groups such as methyl, ethyl, n- and iso-propyl, n-, iso- and tert-butyl, n-, iso-, sec- and tert-amyl, neo-pentyl, hexyl, 2-ethylhexyl, heptyl, octyl, decyl, undecyl, dodecyl, tridecyl, tetradecyl, hexadecyl, octadecyl and allyl; alicyclic hydrocarbon groups such as cyclohexyl, 2-methylcyclohexyl and cyclopentyl; and aromatic hydrocarbon groups such as phenyl, cresyl, xylyl and naphthyl. Of them, an aliphatic hydrocarbon group is preferred. As the halogen represented by X in the formula, there may be employed chlorine, bromine and iodine. Of them, chlorine is preferred.

As examples of the vanadium compounds, there may be mentioned $VCl_4$, $VOCl_3$, $VOCl_2(On\text{-}C_4H_9)$, $VOCl(On\text{-}C_4H_9)_2$, $VO(On\text{-}C_4H_9)_3$ and $VCl_3(OC_2H_5)$. Of them, $VCl_4$ and $VOCl_3$ are preferred.

As examples of the zirconium compounds, there may be mentioned $ZrCl_4$, $Zr(On\text{-}C_4H_9)_4$ and $Zr(OCH_3)_4$, $Zr(OC_2H_5)_4$, $Zr(iso\text{-}C_3H_7O)_4$, $Zr(On\text{-}C_3H_7)_4$, $ZrO(CH_3COO)_2$.

As the hafnium compounds, there may be employed $HfCl_4$, $Hf(On\text{-}C_4H_9)_4$ and $Hf(OC_3H_7)_4$.

The reaction between the solid (2) and the member (iv) may be carried out by using an inert reaction medium or by using the member (iv) per se as the reaction medium without using such inert reaction medium, i.e., by adding the solid (2) directly to the member (iv).

As the inert reaction medium, there may be employed an aliphatic hydrocarbon such as hexane and heptane, an aromatic hydrocarbon such as benzene and toluene, and an alicyclic hydrocarbon such as cyclohexane and methylcyclohexane. There is no particular limitation with respect to the reaction temperature, but it is preferred that the reaction be carried out at a temperature in the range of from the room temperature to 150°C.

As the member (iv), there may also be employed a reaction product obtained by the reaction between two or more compounds selected from titanium compounds, vanadium compounds, zirconium compounds and hafnium compounds. The reaction product is prepared by subjecting two or more compounds to a mutual reaction prior to the reaction between the solid (2) and the member (iv). The reaction between two or more compounds is effected in the presence or absence of an inert hydrocarbon solvent.

Also, it is possible to employ the above-mentioned titanium compounds, vanadium compounds, zirconium compounds and hafnium compounds and reaction products in the form of a mixture. A mixture may be prepared by effecting mixing prior to the reaction between the solid (2) and the member (iv), or alternatively, mixing may be effected in the presence of the solid (2). With respect to the reaction between the solid (2) and such mixture, it is preferred that the mixture be employed in such a state that it is diluted in an inert reaction medium which is to be used for the reaction between the solid (2) and the member (iv). But it is also possible to effect a reaction between the solid (2) and the mixture by using such mixture per se as the reaction medium, i.e., by directly adding the solid (2) to the mixture without using the inert reaction medium.

In the meantime, according to the method of the present invention, it is possible to effect grinding in order to subject the member (iv) to an intimate contact with the solid (2). As the grinding means, there may be employed any of the customary mechanical grinding means such as a revolving ball mill, a vibration ball mill, an impact ball mill, and the like. The grinding time is generally in the range of 0.5 to 100 hours, preferably 1 to 30 hours, and the grinding temperature is in the range of 0 to 200°C, preferably 10 to 150°C.

According to the method of the present invention, the reaction of the solid (2) with the member (iv) takes place in the presence of an organometallic compound (vi) of at least one metal belonging to the Groups I to III of the Periodic Table. Preferred are an organoaluminum compouund and an organomagnesium compound. As the organoaluminum compound, there may be mentioned an organoaluminum compound represented by the formula $AlR^0_tZ_{3-t}$ (wherein $R^0$ is a hydrocarbon residue having 1 to 10 carbon atoms, Z is a group selected from the group consisting of a halogen, a hydrocarbyloxy group, a siloxy group and hydrogen, and t is a number in the range of $1 \leqq t \leqq 3$), reaction products obtained by the reaction therebetween, and mixtures thereof.

Preferred examples of the organoaluminium compound include triethylaluminum, tri-n-propylaluminum, triisopropylaluminum, tri-n-butylaluminum, triisobutylaluminum, trihexylaluminum, trioctylaluminum, tridecylaluminum, isoprenylaluminum, diethylaluminum hydride, diisobutylaluminum hydride, diethylaluminum chloride, diisopropylaluminum chloride, di-n-propylaluminum chloride, diisobutylaluminum chloride, sesquiethylaluminum chloride, sesquiisobutylaluminum chloride, sesquisopropylaluminum chloride, sesqui-n-propylaluminum chloride, ethylaluminum dichloride, n-propylaluminum dichloride, iso-propylaluminum dichloride, butylaluminum dichloride, diethylaluminum bromide and diethylaluminum iodide and mixtures thereof.

According to the present invention, the solid catalyst component (A) thus obtained may preferably be treated with at least one compound (v) selected from the group consisting of a titanium tetrahalide, an aluminum halide, a silicon halide and a tin halide. As the titanium tetrahalide, there may be employed titanium tetrachloride, titanium tetrabromide and titanium tetraiodide and mixtures thereof. As the aluminum halide, there may be employed aluminum trichloride, ethyldichloroaluminum, methyldichloroaluminum, propyldichloroaluminum, butyldichloroaluminum, an alkyl aluminum dichloride such as ethyl aluminum dichloride, an alkyl aluminum sesquichloride such as ethyl aluminum sesquichloride, a dialkyl aluminum chloride such as diethyl aluminum chloride, aluminum tribromide and ethyl aluminum diiodide and mixtures thereof. As the silicon halide and the tin halide, there may be employed a silicon tetrahalide, a monoalkyl tin halide or a tin tetrahalide and the like. Of them, especially preferred are an alkyl aluminum dichloride, an alkyl aluminum sesquichloride, a dialkyl aluminum chloride, silicon tetrachloride and tin tetrachloride.

The thus obtained solid catalyst component (A) has such excellent properties that it has an extremely large surface area as determined in terms of BET specific surface area; that is has a high catalytic activity; that it is capable of producing a polymer having excellent particle properties; and that it brings about an excellent copolymerization effect.

Although the mechanism in which the solid catalyst component (A) exhibits such surprisingly excellent activities has not yet been fully elucidated, it is believed that such excellent activities are ascribable to the use of a highly active organomagensium-containing solid material [solid(1)] which is obtained by reacting a specific organomagnesium component with an H-Si-Cl bond-containing chlorosilane.

According to the method of the present invention, the solid catalyst component (A) is used in combination with an organometallic compound (B), thereby to provide a catalyst.

As the organometallic compound, compounds of metals of Group I to III of the Periodic Table are employed. Especially, an organoaluminum compound and a complex containing an organomagnesium are preferred.

As the organoaluminum compound, there may be employed a compound represented by the general formula $AlR^{12}_tZ_{3-t}$ wherein $R^{12}$ is a hydrocarbon residue having 1 to 20 carbon atoms, Z is a member selected from the group consisting of hydrogen, a halogen, an alkoxy group, an aryloxy group and a siloxy group, and t is a number from 2 to 3. Such organoaluminum compounds are employed alone or in mixture. In the above formula, examples of the hydrocarbon residue having 1 to 20 carbon atoms represented by $R^{12}$ include aliphatic hydrocarbons, aromatic hydrocarbons, and alicyclic hydrocarbons. As specific examples of such compounds, there may be mentioned triethylaluminum, tri-n-propylaluminum, triisopropylaluminum, tri - n - butylaluminum, triisobutylaluminum, trihexylaluminum, trioctylaluminum, tridecylaluminum, tridodecylaluminum, trihexadecyl aluminum, diethylaluminum hydride, diisobutylaluminum hydride, diethylaluminum ethoxide, diisobutylaluminum ethoxide, dioctylaluminum butoxide, diisobutylaluminum octyloxide, diethylaluminum chloride, diisobutylaluminum chloride, dimethylhydrosiloxyaluminum dimethyl, ethylmethylhydroxyaluminum diethyl, ethyldimethylsiloxyaluminum diethyl and aluminum isoprenyl and the like, and mixtures thereof.

A highly active catalyst can be obtained by using these alkylaluminum compounds in combination with the above-mentioned solid catalyst component (A). Of these aluminum compounds, triethylaluminum and a dialkylaluminum hydride are preferred, since the use thereof leads to attainment of an extremely high catalytic activity.

As examples of the complex containing an organomagnesium, there may be mentioned the previously stated complex represented by the general formula $M_\alpha Mg_\beta R^1_p R^2_q X_r Y_s$ wherein α, β, p, q, r, s, M, $R^1$, $R^2$, X and Y are as defined above. It is desired that the complex be soluble in a hydrocarbon. In this respect, the ratio of β/α is preferably in the range of 0.5 to 10, and M is preferably aluminum.

The solid catalyst component (A) and the organometallic compound component (B) may be added to the polymerization system separately under the polymerization conditions, or may be blended prior to the polymerization. With respect to the ratio of the solid catalyst component (A) and the organometallic compound component (B), it is preferred that the organometallic compound component (B) be employed in an amount of 1 to 3000 mmol per gram of the solid catalyst component (A).

The olefin which can be polymerized using the catalyst according to the present invention are α-olefins, particularly ethylene. Moreover, the catalyst of the present invention can be used for the highly stereoregulated polymerization of propylene by subjecting the catalyst to the treatment with an electron donor such as a carboxylic acid and a derivative thereof. It is also possible to use the catalyst according to the present invention for the copolymerization of ethylene or propylene with other monoolefins (for example, butene-1, hexene-1, propylene) or diolefins (for example, butadiene, isoprene). It is further possible to use the catalyst of the present invention for the polymerization of a diene.

As the polymerization method, there may be employed any of the customary polymerization method, e.g., suspension polymerization method, solution polymerization method, gas phase polymerization method and high-pressure polymerization method [at a pressure of 100 to 3000 $Kg/cm^2$ (gauge)]. It is also possible to effect polymerization of ethylene or propylene in such a manner that the catalyst is introduced to a polymerization vessel together with a solvent, for example, an aliphatic hydrocarbon such as hexane, heptane and isobutane, an aromatic hydrocarbon such as benzene, toluene and xylene, and an alicyclic hydrocarbon such as cyclohexane and methylcyclohexane, and then ethylene or propylene is charged under an inert atmosphere at a pressure of 1 to 3000 $Kg/cm^2$ (gauge), followed by polymerization at a temperature in the range of room temperature to 300°C.

The present invention will be illustrated by the following Examples that should not be construed as limiting the scope of the present invention.

In the following Examples, the terms "MI" "FR" and "catalytic efficiency" exmployed respectively have the following definitions.

(1) MI: A melt index as measured in accordance with ASTM D-1238 at a temperature of 190°C under a load of 2.16 Kg.

(2) FR: A quotient obtained by dividing a melt index value as measured in accordance with ASTM D-1238 at a temperature of 190°C under a load of 21.6 Kg by a melt index value as measured in accordance with ASTM D-1238 at a temperature of 190°C under a load of 2.16 Kg. "FR" is a barometer of the molecular weight distribution.

(3) Catalytic efficiency: The yield of a polymer per gram of a transition metal (Me) contained in the catalyst used and hereinafter expressed in terms of "Kg-polymer/g-Me".

The bulk density was determined in accordance with ASTM D-1895.

The density was determined in accordance with ASTM D 1505-68.

Example 1

[1] Preparation of an organomagnesium component (a)

Under nitrogen atmosphere, 50 g of powdery metal magnesium was weighted into a 2-liter flask. Then, 20 mmol of butoxyaluminum dichloride and 300 ml of n-octane were charged in the flask, and the temperature of the mixture was elevated to 100°C. To the mixture was added dropwise a solution comprising a 1 mol of n-butyl chloride, 1 mol of butyl bromide and 0.7 liter of n-octane while stirring over a period of about 2 hours. After completion of the dropwise addition, the reaction was allowed to proceed for 1 hour while stirring. The solid portion was filtered off and the filtrate was subjected to analysis by the chelate titration method. By the analysis, it was found that the solid portion contained magnesium and aluminum at concentrations of 0.90 mol/liter and 0.020 mol/liter, respectively. Then, 400 ml of the above-obtained filtrate was charged into a 1-liter flask, followed by addition of 130 mmol of n-butyl alcohol while stirring at 0°C. The reaction was allowed to proceed while stirring at 30°C for 1 hour. The resultant was analyzed by the chelate titration method, and it was revealed that it contained 0.89 mol/liter of

$$AlMg_6(C_2H_5)_3(n\text{-}C_4H_9)_{11}(On\text{-}C_4H_9).$$

[2] Preparation of a solid (1)

A 2-liter flask provided with a dropping funnel and a condenser was thoroughly deaerated and dried and 0.65 mol of trichlorosilane ($HSiCl_3$) solution in n-heptane (1 mol/liter) was charged in this flask under nitrogen atmosphere. While maintaining the temperature of the solution at 50°C, 0.5 mol of the organomagnesium complex solution as prepared in [1] above was added dropwise through the dropping funnel over a period of 1 hour, and the reaction was allowed to proceed while stirring at 50°C for 1 hour. The reaction mixture was washed 5 times with n-hexane by decantation, whereby a slurry of a solid material was obtained. Then, the solid material was isolated and dried, and subjected to analysis by the chelate titration method. By the analysis, it was found that the so-obtained solid material [solid (1)] contained 9.18 mmol of Mg, 19.15 mmol of Cl, 1.73 mmol of Si and 0.60 mmol of alkyl group per gram of the solid material.

[3] Preparation of a solid catalyst component (A)

In an autoclave which had been purged with nitrogen, a slurry containing 20 g of the above-prepared solid (1) was reacted with 70 mmol of propionaldehyde and 2 liters of n-hexane while stirring at 80°C for 1 hour. After removal of the supernatant by decantation the solid residue was washed twice with 300 ml of n-hexane. The temperature of the resulting slurry was kept at 10°C, and 20 mmol of titanium tetrachloride solution in n-hexane (1 mol/liter) and 20 mmol of diethyl aluminum chloride solution in n-hexane (1 mol/liter) were added thereto. After completion of the addition, reaction was allowed to proceed while stirring for 30 minutes. Then, the teperature was elevated to 60°C and the reaction was allowed to proceed for further 2 hours. After cooling to room temperature, the supernatant was removed by decantation, and the solid residue was washed twice with 300 ml of n-hexane, followed by addition of 300 ml of heptane, whereby a solid catalyst component (A) was obtained. The so-obtained solid catalyst component (A) was analyzed by the chelate titration method. As a result, it was found that the solid catalyst component (A) contained 2.0 wt% of titanium and 0.47 mmol of the hydrocarbon residue per gram of the component (A).

[4] Polymerization of ethylene (I)

5 mg of the solid catalyst component (A) as prepared in [3] above and 0.25 mmol of triisobutylaluminum [organometallic compound component (B)] were charged, together with 800 ml of dehydrated and deaerated n-hexane, into a 1.5-liter autoclave, the inside of which had been dehydrated and deaerated. In this autoclave, 120 mmol of butene-1 was further charged. The autoclave was pressurized to 1.6 $Kg/cm^2$ (gauge) with hydrogen, while maintaining the temperature of the inside of the autoclave at 80°C. Then, ethylene was introduced into the autoclave, thereby to adjust the total pressure to 4 $Kg/cm^2$ (gauge). Polymerization was allowed to proceed for 1 hour while maintaining the total pressure at 4.0 $Kg/cm^2$ (gauge) by supplying ethylene. As a result, there was obtained 167 g of a polymer. The catalytic efficiency was 1670 Kg-polymer/g-titanium (hereinafter abbreviated as "Ti") and MI was 0.80 g/10 min. The resulting polymer had a bulk density of 0.48 $g/cm^3$, and 85% by weight or more of the so-obtained powdery polymer had a particle size of 105 to 149 μm.

[5] Polymerization of ethylene (II)

8 mg of the solid catalyst component (A) as prepared in [3] above and 0.1 mmol of triethylaluminum [(organometallic compound component (B)] were charged, together with 800 ml of dehydrated and deaerated cyclohexane, in a 1.5-liter autoclave of which the inside had been deaerated and dried. Subsequently, in this autoclave, 3 mmol of hydrogen and 800 mmol of 1-octene were charged. The temperature of the inside of the autoclave was elevated to 180°C, and polymerization was allowed to proceed for 20 minutes while maintaining the total pressure at 19 $Kg/cm^2$ (gauge) by supplying ethylene. As a result, there was obtained 115 g of a polymer. The catalytic efficiency, MI, FR and the density of the resulting powdery polymer were as follows:

| | |
|---|---|
| Catalytic efficiency | 719 Kg-polymer/g-Ti |
| MI | 0.76 g/10 min |
| FR | 30 |
| Density | 0.924 g/$cm^3$ |

[6] Polymerization of ethylene (III)

Polymerization of ethylene was carried out in gas phase using a stainless steel-made, fluid bed type autoclave having a capacity of 50 liters. Into the autoclave of which the temperature had been adjusted to 80°C, were charged 30 mg of the solid catalyst component (A) as prepared in [3] above and 15 mmol of triethylaluminum [organometallic compound component (B)], together with 50 g of the polyethylene as obtained in [4] above. While supplying into the autoclave a gas mixture consisting of ethylene, butene-1 and hydrogen [ethylene: butene-1: hydrogen=1:0.25:0.02 (molar ratio) at a flow rate of 15 cm/sec, polymerization was allowed to proceed at a pressure of 10 Kg/$cm^2$ (gauge) for 1 hour. There was obtained 672 g of a polymer having a bulk density of 0.44 g/$cm^3$. The catalytic efficiency, MI and the density of the resulting polymer were as follows:

| | |
|---|---|
| Catalytic efficiency | 1,040 kg-polymer/g-Ti |
| MI | 1.05 g/10 min |
| Density | 0.923 g/$cm^3$ |

[7] Polymerization of ethylene (IV)

Into an autoclave-type continuous polymerization reactor provided with an agitator were charged, by means of a high pressure pump, 0.05 mmol (in terms of the amount of Ti) of the solid catalyst component (A) as prepared in [3] above and 8 mmol of triethylaluminum [organometallic compound component (B)] dispersed in 250 ml of n-hexane. Under the conditions as indicated in Table 1, polymerization was carried out while supplying ethylene containing 0.2 mole % of hydrogen. The results obtained are shown in Table 1.

TABLE 1

| Experiment | Polymerization conditions | | | | Results of polymerization | | |
|---|---|---|---|---|---|---|---|
| | Temperature (°C) | Pressure ($Kg/cm^2$) (gauge) | Co-monomer | | Catalytic efficiency (g-polymer/g-Ti) | MI (g/10 min) | Density ($g/cm^3$) |
| | | | Compound | Concentration (mol %) | | | |
| (IV)—1 | 240 | 1500 | — | — | 72,300 | 0.41 | 0.959 |
| (IV)—2 | 230 | 1500 | propylene | 30 | 66,300 | 0.40 | 0.932 |
| (IV)—3 | 230 | 1500 | butene-1 | 31 | 63,900 | 0.44 | 0.935 |
| (IV)—4 | 220 | 1300 | hexene-1 | 26 | 60,100 | 0.51 | 0.934 |

Example 2

Under nitrogen atmosphere, 300 ml of a solution of methyldichlorosilane in heptane (1 mol/liter) and 200 ml of n-heptane were charged in a flask, and the temperature of the mixture was elevated to 50°C. Then, 500 ml of a heptane solution containing 250 mmol of an organomagnesium component

$$AlMg_{10}(C_2H_5)_5(n\text{-}C_8H_{17})_7(OC_4H_9)_{11}$$

was added dropwise at 50°C over a period of 1 hour, and the reaction was allowed to proceed for 1 hour while stirring. The resulting slurry was washed twice with n-hexane by decantation. The slurry containing 2 g of the formed solid was taken, and reacted with 3 mmol of triphenylsilanol together with 100 ml of n-hexane at 80°C for 1 hour while stirring. The supernatant was removed by decantation and the solid residue was washed twice with 100 ml of n-hexane.

The resulting slurry was kept at 50°C, and 5 mmol of diethylaluminum chloride and 100 ml of n-hexane were added while stirring, and the resultant was allowed to react at 60°C for 1 hour. After removal of the supernantant by decantation, the solid residue was washed twice with 100 ml of n-hexane. Thereafter, 5 mmol of diethylaluminum chloride, 5 mmol of titanium tetrachloride and 100 ml of n-hexane were added, and the resultant was allowed to react at 50°C for 1 hour. The resultant was then washed twice with 100 ml of n-hexane, thereby to obtain a solid catalyst component (A). The solid catalyst component (A) thus obtained had a specific surface area of 610 $m^2/g$ as measured by the BET method.

Using this solid catalyst component (A), slurry polymerization of ethylene was carried out in substantially the same manner as in Example 1-[4]. The results obtained were as follows:

| | |
|---|---|
| Catalytic efficiency | 1215 kg-polymer/g-Ti |
| MI | 1.0 g/10 min |
| Bulk density | 0.45 $g/cm^3$ |
| Percentage of polymer powder having a particle size of 105 to 149 µm relative to the total amount of the obtained polymer. | 88 wt% or more |

Examples 3 to 6

Solid catalyst components (A) were prepared in substantially the same manner as in Example 1 except that materials as indicated in Table 2 were employed. 0.002 mmol (in terms of the amount of transition metal used) of the solid catalyst component thus obtained and 0.25 mmol of triethylaluminum [organometallic compound component (B)] were charged, together with 800 ml of dehydrated and deaerated n-hexane, into a 1.5-liter autoclave of which the inside had been dehydrated and deaerated. In this autoclave, 50 ml of liquefied butene-1 was charged. The temperature inside the autoclave was kept at 80°C. The autoclave was pressurized to 1.6 $Kg/cm^2$ (gauge) with hydrogen, and ethylene was subsequently introduced, thereby to adjust the total pressure to 4 $Kg/cm^2$ (gauge). Polymerization was carried out for 1 hour while maintaining the total pressure at 4 $Kg/cm^2$ (gauge) by supplying ethylene. The results obtained are shown in Table 2.

TABLE 2

| | Preparation of solid (1) | | | |
|---|---|---|---|---|
| | | | Reaction conditions | |
| | Organomagnesium component | Chlorosilane compound | Reaction molar ratio (Mg/Si) | Temperature (°C) × time (h) |
| Example 3 | $AlMg_6(C_2H_5)_2(n\text{-}C_4H_9)_{9.5}(O-\overset{H}{\underset{CH_3}{Si}}-C_2H_5)_{3.5}$ | $HSiCl_2CH_3$ | 1/2 | 65×2 |
| Example 4 | $ZnMG_{2.0}(C_2H_5)_2(n\text{-}C_4H_9)_{3.9}$ | $HSiCl_3$ | 1/1 | 55×2 |
| Example 5 | $BeMg_4(C_2H_5)_{0.7}(n\text{-}C_3H_7)_{6.3}[N(n\text{-}C_4H_9)_2]_{3.9}$ | $HSiCl_3$ | 1/1.3 | 50×1 |
| Example 6 | $BMg(C_2H_5)_{2.8}(n\text{-}C_4H_9)_{1.5}(SC_2H_5)_{0.7}$ | $HSiCl_2C_2H_5$ | 2/1 | 40×1 |
| Example 7 | $LiMg_3(n\text{-}C_4H_9)_4(C_2H_5)$ | $HSiCl_3$ | 1/2 | 50×1 |
| Example 8 | $(n\text{-}C_4H_9)Mg(C_2H_5)$ | $HSiCl_3$ | 1/1.5 | 60×1 |
| Example 9 | $Mg(n\text{-}C_6H_{13})_{1.6}(On\text{-}C_4H_9)_{0.4}$ | $HSiCl_2CH_3$ | 1/1.2 | 65×1 |
| Example 10 | $(Sec\text{-}C_4H_9)_2Mg$ | $HSiCl(CH_3)_2$ | 1/1.1 | 60×1 |
| Example 11 | $(Sec\text{-}C_4H_9)Mg(n\text{-}C_4H_9)$ | $HSiCl_2(n\text{-}C_4H_9)$ | 1/1.4 | 60×1 |

TABLE 2 (cont.)

| Compound (iii) (Amount, mmol) | Member (iv) (transition metal/Mg molar ratio) | Results of polymerization | | | |
|---|---|---|---|---|---|
| | | MI (g/10 min) | Catalytic efficiency (Kg-polymer/ g-Me) | Density (g/cm³) | Bulk density (g/cm³) |
| Trimethylsilanol (75) | $Al(C_2H_5)_{15}Cl_{15}+TiCl_4$ (1/16) (1/16) | 1.1 | 1250 | 0.942 | 0.46 |
| Methylhydropolysiloxane (120) | $TiCl_4+AlMg_6(C_2H_5)_3(n\text{-}C_4H_9)_6(O-Si(H)(CH_3)-C_2H_5)_6$ (1/16) (1/16) | 0.81 | 1240 | 0.944 | 0.44 |
| n-hexaldehyde (130) | $TiCl_4+Al(C_2H_5)_2Cl$ (1/16) (1/16) | 0.77 | 1290 | 0.948 | 0.45 |
| Benzaldehyde (120) | $Al(C_2H_5)_2Cl+TiCl_4+Zr(On\text{-}C_4H_9)_4$ (1/16) (1/16) (1/16) | 1.3 | 1020 | 0.940 | 0.46 |

Examples 7 to 12

A solid (1) was prepared in substantially the same manner as in Example 1-[2], except that 500 ml of an organomagnesium component

$$Li_{0.06}Mg(C_2H_5)_{0.5}(n\text{-}C_4H_9)_{0.5}(On\text{-}C_4H_9)_{10}$$

and a mixture of 250 mmol of methyldichlorosilane and 250 mmol of trichlorosilane were used. Using the so-obtained solid (1), a solid catalyst component (A) was prepared in substantially the same manner as in Example 1-[3], except that 250 mmol of propionaldehyde and 50 mmol of propionaldehyde diethylacetal were used in place of propionaldehyde.

Using 0.20 mmol (in terms of the amount of Ti) of the so-obtained solid catalyst component (A), 2 mmol of triethylaluminum [organometallic compound component (B)] and 800 ml of n-hexane, 5 g of ethylene was subjected to prepolymerization at 40°C. 0.002 mmol (in terms of the amount of Ti) of the resultant was weighed, and charged in a 1.5-liter autoclave together with 800 ml of isobutane. Then, a co-monomer as indicated in Table 3 was introduced into the autoclave, and the temperature of the autoclave was elevated to 80°C. The autoclave was pressurized to 9.5 Kg/cm$^2$ (gauge) with hydrogen, and ethylene was subsequently introduced, thereby to adjust the total pressure to 11.5 Kg/cm$^2$ (gauge). Polymerization was carried out for 1 hour. The results obtained are shown in Table 3.

TABLE 3

| | Co-monomer | | Results of polymerization | | | |
|---|---|---|---|---|---|---|
| | Compound | Amount (mmol) | Catalytic efficiency (Kg-polymer/ g-Ti) | MI (g/10 min) | Density (g/cm$^3$) | Bulk density (g/cm$^3$) |
| Example 7 | — | — | 1180 | 0.88 | — | 0.45 |
| Example 8 | Propylene | 200 | 1490 | 1.01 | 0.952 | 0.47 |
| Example 9 | Butene-1 | 150 | 1660 | 1.20 | 0.948 | 0.43 |
| Example 10 | Hexene-1 | 100 | 1470 | 1.00 | 0.943 | 0.45 |
| Example 11 | 4-Methylpentene-1 | 80 | 1420 | 0.98 | 0.944 | 0.44 |
| Example 12 | Octene-1 | 100 | 1380 | 0.93 | 0.947 | 0.43 |

Examples 13 and 14

20 g of silica (No. 952, manufactured and sold by Fuji-Division, Japan, having a specific surface area of 300 m$^2$/g and a pore volume of 1.65 cm$^3$/g) which had been dried under a stream of nitrogen gas at 200°C for 4 hours and 6 mmol of $AlMg_6(C_2H_5)_3(n\text{-}C_4H_9)_9(On\text{-}C_4H_9)_3$ (solution in n-hexane, 100 ml) were charged in a flask. While maintaining the temperature at 65°C, 8 mmol of trichlorosilane (solution in n-hexane, 100 ml) was added dropwise thereinto over a period of 1 hour, and the resulting mixture was allowed to react at 65°C while stirring for 1 hour. After completion of the reaction, the supernatant was removed by decantation, thereby to obtain a solid residue [solid (1)]. Solid catalyst components (A) were prepared in substantially the same manner as in Example 1-[3], except that the above-obtained solid (1) and compounds as indicated in Table 4 were used. Using the so-obtained solid catalyst components (A), polymerization of ethylene was effected in n-hexane. The results obtained are shown in Table 4.

TABLE 4

| | Compound (iii) | | Results of polymerization | | |
|---|---|---|---|---|---|
| | Compound | Amount (mmol) | Catalytic efficiency (Kg-polymer/ g-Ti) | MI (g/10 min) | Bulk density (g/cm$^3$) |
| Example 13 | Trimethylsilanol | 200 | 650 | 1.1 | 0.42 |
| Example 14 | Methylpolysiloxane | 400 | 600 | 1.7 | 0.41 |

Examples 15 to 17

A solid catalyst component (A) was prepared in substantially the same manner as in Example 1. Using the so-prepared solid catalyst component (A) in combination with triethylaluminum as the organometallic compound component (B), various olefins as indicated in Table 5 were subjected to polymerization. The results obtained are shown in Table 5.

TABLE 5

| | Olefin | Polymerization conditions: Amount of solid catalyst component (A) (mg) | Amount of triethyl-aluminum (mmol) | Temperature (°C)×time (h) | Yield of polymer (g) |
|---|---|---|---|---|---|
| Example 15 | Propylene | 100 | 3.0 | 60×2 | 150 |
| Example 16 | Butene-1 | 200 | 2.0 | 60×2 | 200 |
| Example 17 | 4-Methyl-pentene-1 | 400 | 3.0 | 60×2 | 168 |

Examples 18 and 19

A solid catalyst component (A) was prepared in substantially the same manner as in Example 1. Using the so-prepared solid catalyst component (A), various olefins as indicated in Table 6 were subjected to polymerization in substantially the same manner as in Example 15. The results obtained are shown in Table 6.

TABLE 6

| | Olefin | Polymerization conditions: Amount of solid catalyst component (A) (mg) | Amount of triethyl-aluminum (mmol) | Temperature (°C)× time (h) | Yield of polymer (g) |
|---|---|---|---|---|---|
| Example 18 | Octene-1 | 100 | 3.0 | 35×2 | 110 |
| Example 19 | Decene-1 | 100 | 3.0 | 40×2 | 108 |

Example 20

A solid (1) was prepared in substantially the same manner as in Example 1-[2], except that 300 mmol of an organomagnesium component $C_6H_5MgCl$ (solution in diethyl ether: 0.5 mol/liter) and 350 mmol of trichlorosilane wsre used. A solid catalyst component (A) was prepared in substantially the same manner as in Example 1-[3], except that 200 mmol of isobutyl alcohol was used in place of propionaldehyde. Analysis by the chelate titration method showed that the so-prepared solid catalyst component (A) contained 2.1% by weight of titanium.

Using 0.002 mmol (in terms of the amount of Ti) of the so-prepared solid catalyst component (A), 0.25 mmol of triisobutylaluminum as the organometallic compound component (B) and 800 ml of n-hexane, polymerization of ethylene was carried out in substantially the same manner as in Example 1-[4]. The results obtained are shown in Table 7.

Example 21

A solid (1) was prepared in substantially the same manner as in Example 1-[2], except that 300 mmol of an organomagnesium component $(n\text{-}C_4H_9)_2Mg \cdot (On\text{-}C_4H_9)_2$ (solution in heptane, 1 mol/liter) was reacted with 350 mmol of phenyldichlorosilane at 80°C. A solid catalyst component (A) was prepared in substantially the same manner as in Example 1, except that the above-obtained solid (1) and 180 mmol of n-butyl alchol were used. Analysis by the chelate titration method showed that the so-prepared solid catalyst component (A) contained 2.0% by weight of titanium.

Using 0.002 mmol (in terms of the amount of Ti) of the so-prepared solid catalyst component (A), 0.25 mmol of triisobutylaluminum as the organometallic compound component (B) and 800 ml of n-hexane,

polymerization of ethylene was carried out in substantially the same manner as in Example 1-[4]. The results obtained are shown in Table 7.

Example 22

Into 500 ml of a solution of an organomagnesium component

$$Mg_6Al(C_2H_5)_2(n\text{-}C_4H_9)_{11}(On\text{-}C_4H_9)_2$$

in heptane (0.97 mol/liter) was added 80 ml of a solution of m-cresol in toluene (0.5 mol/liter) to obtain an organomagnesium complex. Using the so-obtained organomagnesium complex, a solid catalyst component (A) was prepared in substantially the same manner as in Example 1-[2] and [3]. Using the so-prepared solid catalyst component (A), polymerization of ethylene was carried out in substantially the same manner as in Example 20. The results obtained are shown in Table 7.

TABLE 7

| | Results of polymerization | | | |
|---|---|---|---|---|
| | Catalytic efficiency (Kg-polymer/g-Ti) | MI (g/10 min) | Density ($g/cm^3$) | Bulk density ($g/cm^3$) |
| Example 20 | 1110 | 1.1 | 0.944 | 0.40 |
| Example 21 | 1140 | 1.0 | 0.945 | 0.42 |
| Example 22 | 1270 | 1.8 | 0.943 | 0.38 |

Example 23.

20 g of a silica-alumina (having an alumina content of 4% by weight, a specific surface area of 390 $m^2/g$ and a pore volume of 2 $cm^3/g$) which had been dried under a stream of nitrogen gas at 200°C for 4 hours was weighed into a flask together with 6 mmol of

$$AlMg_6(C_2H_5)_3(n\text{-}C_4H_9)_9(On\text{-}C_3H_7)_3.$$

While maintaining the temperature at 70°C, 8 mmol of trichlorosilane (solution in n-hexane, 100 ml) was added dropwise thereinto over a period of 1 hour. The reaction was allowed to proceed while stirring at 70°C for 1 hour. After completion of the reaction, the supernatant was removed by decantation, thereby to obtain a solid residue [solid (1)]. Then, a solid catalyst component (A) was prepared in substantially the same manner as in Example 1-[3], except that the above-prepared solid (1) and a compound as indicated in Table 8 were used. Polymerization of ethylene was carried out in substantially the same manner as in Example 1-[4]. The results obtained are shown in Table 8.

Example 24

20 g of magnesium oxide which had been dried under a stream of nitrogen gas at 200°C for 4 hours was weighed into a flask together with 10 mmol of

$$AlMg_6(C_2H_5)_3(n\text{-}C_4H_9)_9(On\text{-}C_4H_9)_3,$$

and 8 mmol of methyldichlorosilane (solution in n-hexane, 100 ml) was added dropwise thereinto over a period of 1 hour while maintaining the temperature at 70°C. The reaction was effected while stirring at 70°C for 1 hour. After completion of the reaction, the supernatant was removed by decantation, thereby to obtain a solid residue [solid (1)]. Then, a solid catalyst component (a) was prepared in substantially the same manner as in Example 1-[3], except that the above-prepared solid (1) and a compound as indicated in Table 8 were used. Polymerization of ethylene was carried out in substantially the same manner as in Example 1-[4]. The results obtained are shown in Table 8.

TABLE 8

| | Compound (iii) | | Results of polymerization | | | |
|---|---|---|---|---|---|---|
| | Compound | Amount (mmol) | Catalytic efficiency (Kg-polymer/ g-Ti) | MI (g/10 min) | Density ($g/cm^3$) | Bulk density ($g/cm^3$) |
| Example 23 | n-Butanol | 100 | 850 | 0.55 | 0.944 | 0.43 |
| Example 24 | Valeraldehyde | 100 | 600 | 0.40 | 0.945 | 0.40 |

Example 25

Solid catalyst component (A) was prepared in substantially the same manner as in Example 1, except that materials as indicated in Table 9 were used. The thus obtained solid catalyst component was further treated with a compound (v) as indicated in Table 9. 0.002 mmol (in terms of the amount of transition metal used) of the solid catalyst component (A) thus obtained and 0.25 mmol of triethylaluminum [organometallic compound component (B)] were charged, together with 800 ml of a dehydrated and deaerated n-hexane, into a 1.5-liter autoclave of which the inside had been dehydrated and deaerated. Subsequently, in this autoclave, 120 ml of liquefied butene-1 was charged. The temperature inside the autoclave was maintained at 80°C, and the autoclave was pressurized to 1.6 $Kg/cm^2$ (gauge) with hydrogen. While maintaining the total pressure at 4 $Kg/cm^2$ (gauge) by supplying ethylene, polymerization was carried out for 1 hour. The results obtained are shown in Table 9.

TABLE 9

| | Solid (1) | | | | | |
|---|---|---|---|---|---|---|
| | | | Reaction conditions | | | |
| | Organomagnesium compound | Chloro-silane compound | Molar ratio (Mg/Si) | Tempera-ture (°C) × time (h) | Compound (iii) (Amount, mmol) | Member (iv) (transition metal/ Mg molar ratio) |
| Example 25 | $AlMg_6(C_2H_5)_3(n\text{-}C_4H_9)_{10}(On\text{-}C_4H_9)_2$ | $HSiCl_3$ | 1/1.5 | 50×2 | Isovaleraldehyde (120) | $Al(C_2H_5)_2Cl$(1/16) + $TiBr_4$(1/16) |

TABLE 9 (cont.)

| Compound (V) | | Results of polymerization | | | |
|---|---|---|---|---|---|
| | Reaction conditions | | | | |
| Compound | Temperature (°C)× time (h) | MI (g/10 min) | Catalytic efficiency (Kg-polymer/g-Me) | Density ($g/cm^3$) | Bulk density ($g/cm^3$) |
| $SiCl_4$ | 80×2 | 0.4 | 1430 | 0.946 | 0.47 |

Examples 26 to 28

A solid catalyst component (A) was prepared in substantially the same manner as in Example 1. Using the so-prepared solid catalyst component (A) in combination with an organometallic compound component (B) as indicated in Table 10, polymerization of ethylene was carried out in substantially the same manner as in Example 1-[4]. The results obtained are shown in Table 10.

TABLE 10

| | Component [B] | | Results of polymerization | | | |
|---|---|---|---|---|---|---|
| | Compound | Amount (mmol) | MI (g/10 min) | Catalytic efficiency (Kg-polymer/ g-Ti) | Density ($g/cm^3$) | Bulk density ($g/cm^3$) |
| Example 26 | $AlMg_6(C_2H_5)_3(C_4H_9)_{12}$ | 0.50 | 0.43 | 1230 | 0.953 | 0.43 |
| Example 27 | $AlMg(C_2H_5)_3(n\text{-}C_4H_9)_2$ | 0.25 | 0.98 | 1270 | 0.952 | 0.44 |
| Example 28 | $Mg(C_4H_9)(C_2H_5)$ | 0.55 | 0.18 | 1030 | 0.948 | 0.44 |

Examples 29 to 30

Under nitrogen atmosphere, 300 ml of trichlorosilane solution in heptane (1 mol/liter) and 200 ml of n-heptane were charged in a flask, and the temperature of the mixture was elevated to 65°C. Then, 500 ml of a heptane solution of 250 mmol of

$$AlMg_6(C_2H_5)_3(n\text{-}C_4H_9)_6(OC_4H_9)_6$$

was added dropwise thereinto at 65°C over a period of 1 hour, and the reaction was allowed to proceed for 1 hour while stirring. To the resulting slurry was added a compound (iii) as indicated in Table 11, and reaction was allowed to proceed at the same conditions as employed in Example 1, while stirring at 80°C for 1 hour.

While maintaining the temperature of the resultant at 50°C, 8 mmol of diethylaluminum chloride was added. The reaction was allowed to proceed at 50°C for 1 hour. Then, 5 mmol of titanium tetrachloride and 100 ml of n-hexane were added, and the reaction was allowed to proceed for 1 hour, thereby to obtain a solid catalyst component (A) in the form of a slurry.

Using the so-obtained solid catalyst component (A), slurry polymerization of ethylene was effected in substantially the same manner as in Example 1-[4], and high pressure polymerization of ethylene was also effected in substantially the same manner in Example 1-[7]. The results obtained are shown in Table 11.

TABLE 11

| | | Polymerization of ethylene | | | | | | |
|---|---|---|---|---|---|---|---|---|
| | | Slurry polymerization (in accordance with Example 1-[4]) | | | | High pressure polymerization (in accordance with Example 1-[7]*) | | |
| | Compound (iii) | Catalytic efficiency (Kg-polymer /g-Ti) | MI (g/10 min) | Density ($g/cm^3$) | Bulk density ($g/cm^3$) | Catalyst efficiency (g-polymer/g-Ti) | MI (g/10 min) | Density ($g/cm^3$) |
| Example 29 | Methylhydrodien-polysiloxane | 2070 | 1.3 | 0.944 | 0.47 | 142,000 | 0.25 | 0.936 |
| Example 30 | Triethylsilanol | 2130 | 0.87 | 0.941 | 0.46 | 144,000 | 0.20 | 0.935 |

Note)
* Butene-1 was used as the comonomer.

Example 31

[1] Preparation of an organomagnesium component (a)

Under nitrogen atmosphere, 50 g of powdery metal magnesium was weighed into a 2-liter flask. Then, 21 mmol of butoxyaluminum dichloride and 310 ml of n-octane were charged in the flask, and the temperature of the mixture was elevated to 100°C. Into the mixture was added dropwise a solution comprising 1 mol of n-butyl chloride, 1 mol of butyl bromide and 0.7 liter of n-octane, while stirring over a period of 2 hours. After completion of the dropwise addition, the reaction was allowed to proceed for 1 hour while stirring. The solid portion was filtered off and the filtrate was subjected to analysis by the chelate titration method. By the analysis it was found that the solid portion contained magnesium and aluminum at concentrations of 0.86 mol/liter and 0.018 mol/liter, respectively. Then, 400 ml of the above-obtained filtrate was weighed and taken in a 1-liter flask, followed by addition of 140 mmol of n-butyl alcohol while stirring at 0°C. The reaction was allowed to proceed while stirring at 30°C for 1 hour. The resultant was analyzed by the chelate titration method, and it was revealed that it contained 0.88 mol/liter of

$$AlMg_6(C_2H_5)_3(n\text{-}C_4H_9)_{11}(On\text{-}C_4H_9)_{2.5}.$$

[2] Preparation of a solid (1)

A 2-liter flask provided with a dropping funnel and a condenser was thoroughly deaerated and dried, and 0.68 ml of trichlorosilane ($HSiCl_3$) solution in n-heptane (1 mol/liter) was charged in this flask under nitrogen atmosphere. While maintaining the temperature of the solution at 50°C, 0.5 mol of the organomagnesium complex solution as prepared in [1] above was added dropwise through the dropping funnel over a period 1 hour, and the reaction was allowed to proceed while stirring at 50°C for further 1 hour. The reaction mixture was washed 5 times with n-hexane by decantation, whereby a slurry of a solid material was obtained. Then, the solid material was isolated and dried, and subjected to analysis by the chelate titration method. As a result, it was found that the so-obtained solid material [solid (1)] contained 9.21 mmol of Mg, 19.15 mmol of Cl, 1.64 mmol of Si and 0.61 mmol of alkyl group per gram of the solid material.

[3] Preparation of a solid catalyst component (A)

In an autoclave which had been purged with nitrogen, a slurry containing 20 g of the above-prepared solid (1) was reacted with 100 mmol of butyl alcohol and 2 liters of n-hexane while stirring at 80°C for 1 hour. After removal of the supernatant by decantation, the solid residue was washed twice with 300 ml of n-hexane. The temperature of the resulting slurry was kept at 10°C, and 20 mmol of titanium tetrachloride solution in n-hexane (1 mol/liter) and 22 mmol of ethylaluminum sesquichloride solution in n-hexane (1 mol/liter) were added thereto. After completion of the addition, reaction was allowed to proceed while stirring for 30 minutes. Then, the temperature was elevated to 60°C and reaction was allowed to proceed for further 2 hours. After cooling to room temperature, the supernatant was removed by decantation. The solid residue was washed twice with 300 ml of n-hexane, followed by addition of 300 ml of heptane, whereby a solid catalyst component (A) was obtained. The so-obtained solid catalyst component (A) was analyzed by the chelate titration method. As a result, it was found that the solid catalyst component (A) contained 2.4 wt% of titanium and 0.44 mmol of hydrocarbon residue per gram of the component (A).

[4] Polymerization of ethylene (I)

5 mg of the solid catalyst component (A) as prepared in [3] above and 0.25 mmol of triisobutylaluminum [organometallic compound component (B)] were charged, together with 800 ml of dehydrated and deaerated n-hexane, into a 1.5-liter autoclave, the inside of which had been dehydrated and dried. In this autoclave, 120 mmol of butene-1 was further charged. The autoclave was pressurized to 0.8 $Kg/cm^2$ (gauge) with hydrogen, while maintaining the temperature inside the autoclave at 80°C. Then, ethylene was introduced into the autoclave thereby to adjust the total pressure to 4.0 $Kg/cm^2$ (gauge). Polymerization was allowed to proceed for 1 hour while maintaining the total pressure at 4.0 $Kg/cm^2$ (gauge) by supplying ethylene. As a result, there was obtained 136 g of a polymer. The catalytic efficiency was 1130 Kg-polymer/g-Ti, and MI was 0.77 g/10 min. The resulting polymer had a bulk density of 0.47 $g/cm^3$, and 80% by weight or more of the so-obtained powdery polymer had a particle size of 105 to 149 μm.

[5] Polymerization of ethylene (II)

8 mg of the solid catalyst component (A) as prepared in [3] above and 0.1 mmol of triethylaluminum [organometallic compound component (B)] were introduced, together with 800 ml of deaerated and dried cyclohexane, into a 1.5-liter autoclave of which the inside had been deaerated and dried. Subsequently, in this autoclave, 3 mmol of hydrogen and 800 mmol of 1-octene were charged. The temperature of the inside of the autoclave was elevated to 180°C, and ethylene was introduced therein, thereby to adjust the total pressure to 19 $Kg/cm^2$ (gauge). Polymerization was allowed to proceed for 20 minutes while maintaining the total pressure at 19 $Kg/cm^2$ (gauge) by supplying ethylene. As a result, there was obtained 98 g of a polymer. The catalytic efficiency, MI, FR and density were as follows:

| | |
|---|---|
| Catalytic efficiency | 510 Kg-polymer/g-Ti |
| Ti | 1.4 g/10 min |
| FR | 24 |
| Density | 0.921 $g/cm^3$ |

[6] Polymerization of ethylene (III)

Polymerization of ethylene was effected using a stainless steel-made, fluidized bed type autoclave having a capacity of 50 liters. Into the autoclave of which the temperature had been adjusted to 80°C, were charged 10 mg (in terms of the amount of Ti) of the solid catalyst component (A) as prepared in [3] above and 15 mmol of triethylaluminum [organometallic compound component (B)], together with 50 g of the polyethylene as obtained in [4] above. While supplying into the autoclave a gas mixture consisting of ethylene, butene-1 and hydrogen [ethylene:butene-1:hydrogen=1:0.25:0.02 (molar ratio)] at a flow rate of 15 cm/s, polymerization was allowed to proceed at a pressure of 10 $Kg/cm^2$ (gauge) for 1 hour. There was obtained 613 of a polymer having a bulk density of 0.42 $g/cm^3$. The catalytic efficiency, MI and density of the resulting polymer were as follows:

| | |
|---|---|
| Catalytic efficiency | 768 Kg-polymer/g-Ti |
| MI | 20 g/10 min |
| Density | 0.925 $g/cm^3$ |

[7] Polymerization of ethylene (IV)

Into an autoclave-type continuous polymerization reactor provided with an agitator was charged, by means of a high pressure pump, a dispersion obtained by dispersing 0.05 mol (in terms of the amount of Ti) of the solid catalyst component (A) as prepared in [3] above and 8 mmol of triethylaluminum [organometallic compound component (B)] in 250 ml of n-hexane. Polymerization was then allowed to proceed under the conditions as given in Table 12, while supplying ethylene containing 0.3 mole% of hydrogen. The results obtained are shown in Table 12.

TABLE 12

| Experiment | Polymerization conditions | | | | Results of polymerization | | |
|---|---|---|---|---|---|---|---|
| | | | Co-monomer | | | | |
| | Temperature (°C) | Pressure ($Kg/cm^2$) | Compound | Concen-tration (%) | Catalytic efficiency (g-polymer/g-Ti) | MI (g/10 min) | Density ($g/cm^3$) |
| IV-1 | 240 | 1600 | — | — | 67300 | 0.55 | 0.958 |
| IV-2 | 240 | 1600 | Propylene | 35 | 54800 | 0.70 | 0.933 |
| IV-3 | 230 | 1400 | Butene-1 | 30 | 57900 | 0.68 | 0.934 |
| IV-4 | 230 | 1200 | Hexene-1 | 27 | 52600 | 0.57 | 0.933 |

Example 32

Under nitrogen atmosphere, 300 ml of methyldichlorosilane solution in heptane (1 mol/liter) and 200 ml of n-heptane were charged into a flask, and temperature of the mixture was elevated to 50°C. Then, 500 ml of a heptane solution of 200 mmol of an organomagnesium component

$$AlMg_{10}(C_2H_5)_5(n\text{-}C_8H_{17})_7(On\text{-}C_4H_9)_{11}$$

was added dropwise at 50°C over a period of 1 hour, and the reaction was allowed to proceed for 1 hour while stirring. The resulting slurry was washed twice with n-hexane by decantation. The slurry containing 2 g of the formed solid was taken, and subjected to reaction with 3 mmol of n-amyl alcohol and 100 ml of n-hexane at 80°C for 1 hour while stirring. After removal of the supernatant by decantation, the solid residue was washed twice with 100 ml of n-hexane.

The resulting slurry was kept at 50°C, and 5 mmol of diethylaluminum chloride and 100 ml of n-hexane were added while stirring, and reaction was allowed to proceed at 60°C for 1 hour. After removal of the supernatant by decantation, the solid residue was washed twice with 100 ml of n-hexane. To the resulting slurry were added 5 mmol of diethylaluminum chloride, 5 mmol of titanium tetrachloride and 100 ml of n-hexane, and the resultant was allowed to react at 50°C for 1 hour. The resultant was washed twice with 100 ml of n-hexane, whereby a solid catalyst component (A) was obtained.

Using the so-prepared solid catalyst component (A), slurry polymerization of ethylene was carried out in substantially the same manner as in Example 31-[4]. The results obtained were as follows:

| | |
|---|---|
| Catalytic efficiency | 1066 Kg-polymer/g-Ti |
| MI | 1.4 g/10 min |
| Bulk density of the polymer powder | 0.43 g/$cm^3$ |
| Percentage of the polymer powder having a particle size of 105 to 149 µm relative to the total amount of the obtained polymer | 80 wt% |

Examples 33 to 38

Solid catalyst components (A) were prepared in substantially the same manner as in Example 31, except that materials as indicated in Table 13 were employed. 0.002 mmol (in terms of the amount of the transition metal used) of the solid catalyst component thus obtained and 0.25 mmol of triethylaluminum [organometallic compound component (B)] were charged, together with 800 ml of dehydrated and deaerated n-hexane, into a 1.5-liter autoclave of which the inside had been deaerated and dried. In this autoclave, 50 ml of liquefied butene- was charged. The temperature of the inside of the autoclave was elevated to 80°C. The autoclave was pressurized to 1.6 Kg/$cm^2$ (gauge) with hydrogen, and ethylene was subsequently introduced, thereby to adjust the total pressure to 4 Kg/$cm^2$ (gauge). Polymerization was carried out for 1 hour while maintaining the total pressure at 4 Kg/$cm^2$ (gauge) by supplying ethylene. The results obtained are shown in Table 13.

TABLE 13

| | Preparation of solid (1) | | | |
|---|---|---|---|---|
| | | | Reaction conditions | |
| | Organomagnesium component | Chlorosilane compound | Reaction molar ratio (Mg/Si) | Temperature (°C) ×time (h) |
| Example 33 | 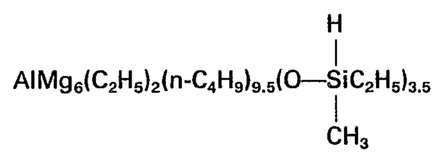 | $HSiCl_2CH_3$ | 1/1.3 | 50×2 |
| Example 34 | $ZnMg_{2.0}(C_2H_5)_{2.0}(n\text{-}C_4H_9)_{3.9}$ | $HSiCl_3$ | 1/1 | 55×2 |
| Example 35 | $BeMg_{4.0}(C_2H_5)_{0.7}(n\text{-}C_3H_7)_{6.3}[N(n\text{-}C_4H_9)_2]_{3.9}$ | $HSiCl_2C_2H_5$ | 1/2 | 50×1.5 |
| Example 36 | $BMg(C_2H_5)_{2.8}(n\text{-}C_4H_9)_{1.5}(SC_2H_5)_{0.7}$ | $HSiCl_3$ | 1/0.8 | 60×2 |
| Example 37 | $LiMg_3(n\text{-}C_4H_9)_4(C_2H_5)_3$ | $HSiCl_2CH_3$ | 1/2 | 50×1 |
| Example 38 | $(sec\text{-}C_4H_9)Mg(n\text{-}C_4H_9)$ | $HSiCl_2(n\text{-}C_4H_9)$ | 1/1.1 | 50×1 |

TABLE 13 (cont.)

| Compound (iii) (Amount, mmol) | Member (iv) (transition metal/Mg molar ratio) | Results of polymerization | | | |
|---|---|---|---|---|---|
| | | Catalytic efficiency (Kg-polymer/g-Me) | MI (g/10 min) | Density ($g/cm^3$) | Bulk density ($g/cm^3$) |
| Methyl alcohol (60) | $Al(C_2H_5)_2Cl+TiCl_4$<br>(1/16) (1/16) | 960 | 1.8 | 0.945 | 0.40 |
| Ethyl alcohol (70) | $Al(C_2H_5)Cl_2+TiCl_4+VOCl_3$<br>(1/16) (1/16) (1/16) | 930 | 1.4 | 0.948 | 0.41 |
| n-Propyl alcohol (100) | $Al(C_6H_{13})_3+TiCl_4+VO(OnC_4H_9)_3$<br>(1/16) (1/16) (1/16) | 1010 | 1.1 | 0.946 | 0.43 |
| iso-propyl alcohol (70) | H<br>\|<br>$AlMg_6(C_2H_5)_3(n\text{-}C_4H_9)_6(OSi\text{—}C_2H_5)_6+TiCl_4$<br>\|<br>$CH_3$<br>(1/16) (1/16) | 1150 | 1.3 | 0.944 | 0.42 |
| n-Hexyl alcohol (100) | $sec\text{-}C_4H_9Li+TiCl_4$<br>(1/16) (1/16) | 1030 | 1.0 | 0.943 | 0.46 |
| Benzyl alcohol (120) | $Al(C_2H_5)_2Cl+TiCl_4+Zr(On\text{-}C_4H_9)_4$<br>(1/16) (1/16) (1/16) | 1100 | 1.1 | 0.940 | 0.43 |

Examples 39 to 44

A solid (1) was prepared in substantially the same manner as in Example 31-[2], except that 500 mmol of an organomagnesium component

$$AlMg_6(C_2H_5)_3(n\text{-}C_4H_9)_6(On\text{-}C_4H_9)_3[O\text{-}SiH(CH_3)(C_2H_5)_3]_3$$

and 300 mmol of methyldichlorosilane were used. Using the so-obtained solid (1), a solid catalyst component (A) was prepared in substantially the same manner as in Example 31-[3], except that a mixture of 150 mmol of tert-butyl alcohol and 150 mmol of n-butanol was used in place of n-butyl alcohol.

Using 0.20 mmol (in terms of the amount of Ti) of the so-obtained solid catalyst component (A), 2 mmol of triisobutyl aluminum [organometallic compound component (B)] and 800 ml of n-hexane, 10 g of ethylene was subjected to prepolymerization at 30°C. 0.002 mmol (in terms of the amount of Ti contained in the catalyst) of the resultant was weighed, and charged in a 1.5-liter autoclave together with 800 ml of isobutane. Then, a co-monomer as indicated in Table 14 was introduced into the autoclave, and the temperature of the autoclave was elevated to 80°C. The autoclave was pressurized to 9.5 $Kg/cm^2$ (gauge) with hydrogen, and ethylene was subsequently introduced, thereby to adjust the total pressure to 11.5 $Kg/cm^2$ (gauge). Polymerization was carried out for 1 hour. The results obtained are shown in Table 14.

TABLE 14

| | Co-monomer | | Results of polymerization | | | |
|---|---|---|---|---|---|---|
| | Compound | Amount (mmol) | Catalytic efficiency (Kg-polymer/g-Ti) | MI (g/10 min) | Density ($g/cm^3$) | Bulk density ($g/cm^3$) |
| Example 39 | | — | 1160 | 0.70 | — | 0.45 |
| Example 40 | Propylene | 150 | 1380 | 0.91 | 0.943 | 0.44 |
| Example 41 | Butene-1 | 130 | 1430 | 1.10 | 0.951 | 0.43 |
| Example 42 | Hexene-1 | 200 | 1390 | 0.80 | 0.944 | 0.42 |
| Example 43 | 4-Methylpentene-1 | 180 | 1330 | 0.98 | 0.952 | 0.43 |
| Example 44 | Octene-1 | 160 | 1350 | 0.90 | 0.945 | 0.43 |

Examples 45 and 46

20 g of silica (No. 952, manufactured and sold by Fuji-Divison, Japan, having a specific surface area of 300 $m^2/g$, and a pore volume of 1.65 $cm^3/g$) which had been dried under a stream of nitrogen gas at 200°C for 4 hours and 6 mmol of

$$AlMg_6(C_2H_5)_3(n\text{-}C_4H_9)_9(On\text{-}C_4H_9)_3$$

(solution in n-hexane, 100 ml) were charged in a flask. While maintaining the temperature at 65°C, 8 mmol of trichlorosilane (solution in n-hexane, 100 ml) was added dropwise thereinto over a period of 1 hour, and the resultant was allowed to react at 65°C for 1 hour while stirring. After completion of the reaction, the supernatant was removed by decantation, thereby to obtain a solid residue [solid (1)].

A solid catalyst component (A) was prepared in substantially the same manner as in Example 31-[3] except that the above-obtained solid (1) and materials as indicated in Table 15 werd used. Using the so-prepared solid catalyst component (A), ethylene was subjected to polymerization in n-hexane. The results obtained are shown in Table 15.

TABLE 15

| | Compound (iii) | | Results of polymerization | | | |
|---|---|---|---|---|---|---|
| | Compound | Amount (mmol) | Catalytic efficiency (kg-polymer/ g-Ti) | MI (g/10 min) | Density ($g/cm^3$) | Bulk density ($g/cm^3$) |
| Example 45 | n-Butyl alcohol | 400 | 630 | 1.8 | 0.945 | 0.40 |
| Example 46 | Hexyl alcohol | 300 | 600 | 1.6 | 0.947 | 0.39 |

Examples 47 to 49

A solid catalyst component (A) was prepared in substantially the same manner as in Example 31. Using the so-prepared solid-catalyst component (A) and triethylaluminum [organometallic compound component (B)] in combination, olefins as indicated in Table 16 were subjected to polymerization. The results obtained are shown in Table 16.

TABLE 16

| | | Polymerization conditions | | | |
|---|---|---|---|---|---|
| | Olefin | Amount of solid cataly- component (A) (mg) | Amount of triethyl- aluminum (mmol) | Temperature (°C)×time (h) | Yield of polymer (g) |
| Example 47 | Propylene | 100 | 3.0 | 60×2 | 130 |
| Example 48 | Butene-1 | 200 | 2.0 | 60×2 | 177 |
| Example 49 | 4-methyl-pentene-1 | 400 | 3.0 | 60×2 | 149 |

Examples 50 and 51

An organomagnesium component

$$AlMg_6(C_2H_5)_3(n\text{-}C_4H_9)_{11}(On\text{-}C_4H_9)$$

was prepared in substantially the same manner as in Example 31-[1]. 0.52 mol of the above-prepared organomagnesium component was reacted with 1 mol of trichlorosilane solution in n-heptane (1 mol/liter) at 65°C. The resultant was then reacted with compounds (iii) as indicated in Table 17. The resultant was washed twice with n-hexane, followed by addition of 5 mmol of diethylaluminum chloride. The mixture was allowed to react, and the reaction product was washed twice with n-hexane, thereby to obtain a slurry.

The temperature of the resulting slurry was kept at 10°C, and 20 mmol of titanium tetrachloride (solution in hexane, 1 mol/liter) and 20 mmol of diethylaluminum chloride (solution in hexane, 1 mol/liter) was added. Reaction was allowed to proceed for 30 minutes. Then, 100 ml of titanium tetrachloride was added, and reaction was allowed to proceed at 100°C for 2 hours. The resultant was washed with n-hexane, whereby a solid catalyst component (A) was obtained.

Using 50 mg of the so-obtained catalyst component (A) and 0.8 mmol of triethylaluminum 0.4 mmol of diethylaluminum chloride, and 0.25 mmol of ethyl benzoate, polymerization of propylene was effected. The results obtained are shown in Table 17.

TABLE 17

| | Compound (iii) | Titanium content of component (A) (% by weight) | Yield of polypropylene (g) |
|---|---|---|---|
| Example 50 | Benzaldehyde | 1.9 | 154 |
| Example 51 | n-Propyl alcohol | 1.7 | 149 |

Examples 52 and 53

A solid catalyst component (A) was prepared in substantially the same manner as in Example 31. Using the so-obtained solid catalyst component (A), olefins as indicated in Table 18 were subjected to polymerization in substantially the same manner as in Example 47. The results obtained are shown in Table 18.

TABLE 18

| | Olefin | Polymerization conditions | | | Yield of polymer (g) |
|---|---|---|---|---|---|
| | | Solid catalyst component (A) (mg) | Triethyl-aluminum (mmol) | Temperature (°C) ×time (h) | |
| Example 52 | Octene-1 | 100 | 3.0 | 30×2 | 105 |
| Example 53 | Decene-1 | 100 | 3.0 | 35×2 | 101 |

Comparative example

13.80 g of di-n-butyl magnesium and 1.90 g of triethylaluminum were charged into a 200 ml-flask which had been purged with nitrogen, together with heptane (100 ml), and reaction was allowed to proceed for 2 hours, thereby to obtain a solution of an organomagnesium complex.

Into a 200 ml-flask equipped with a dropping funnel and a water-cooled reflux condenser which had been purged with nitrogen, 200 mmol of trichlorosilane in heptane (2 mol/liter) was charged, and heated to 65°C. Then, 100 mmol of the solution of the above-obtained organomagnesium complex was weighed and added dropwise to the trichlorosilane solution through the dropping funnel over 1 hour at 65°C while stirring. Reaction was allowed to proceed at 65°C for 1 hour. The resulting precipitate was isolated, washed with n-hexane, and dried to obtain a 8.5 g of a solid material.

To an autoclave which had been purged with nitrogen was charged 5.0 g of the above-obtained solid and 6.0 mmol of ethyl benzoate in hexane (0.1 mol/liter), and the mixture was allowed to react at 80°C for 1 hour while stirring. A solid portion was isolated by filtration, and thoroughly washed with n-hexane, followed by drying to obtain a solid. Then, 4.5 g of the so-obtained solid and 60 ml of titanium tetrachloride were charged in an autoclave which had been purged with nitrogen. Reaction was allowed to proceed at 100°C for 2 hours while stirring. A solid portion was isolated by filtration, washed thoroughly with n-hexane, followed by drying to obtain a solid catalyst component containing 5.5% by weight of titanium.

Using 30 mg of this solid catalyst and 0.4 mmol of triethylaluminum, ethylene was polymerized in substantially the same manner as in Example 1-[4]. The results obtained are as follows:

| | |
|---|---|
| Yield of polymer | 185 g |
| Bulk density | 0.303 g/cm$^3$ |

**Claims**

1. A method of polymerizing an olefin which comprises contacting an olefin with a catalyst comprising a solid catalyst component (A) and an organometallic compound component (B).

said solid catalyst component (A) being one obtained by a process comprising the steps of:

(I) reacting one mole of a component (i) with 0.01 to 100 moles of a chlorosilane compound (ii) containing an H-Si bond and represented by the general formula:

$$H_aSiCl_bR^{10}_{4-(a+b)}$$

wherein

$0<a\leqq2$;

b is a number greater than 0;

$a+b\leqq4$; and

$R^{10}$ is a hydrocarbon residue having 1 to 10 carbon atoms,

to form a solid (1) containing a C-Mg bond;

said component (i) being

either an organomagnesium component (a) represented by the general formula:

$$M_\alpha Mg_\beta R^1_p R^2_q X_r Y_s$$

wherein

M is at least one metal selected from the group consisting of Al, Zn, B, Be and Li;

$R^1$ and $R^2$ each indpendently represent a hydrocarbon residue having 1 to 10 carbon atoms;

X and Y each independently represent a group selected from $OR^3$, $OSiR^4R^5R^6$, $NR^7R^8$, $SR^9$ and halogen, wherein $R^3$, $R^4$, $R^5$, $R^6$, $R^7$ and $R^8$ each indpendently represent a hydrogen atom or a hydrocarbon residue having 1 to 10 carbon atoms, and $R^9$ is a hydrocarbon residue having 1 to 10 carbon atoms;

α is 0 or a number greater than 0;

β is a number greater than 0; and

p, q, r and s each are 0 or a number greater than 0 and satisfying the following relationships:

$$p+q+r+s=m\alpha+2\beta$$

and

$$0\leqq(r+s)/(\alpha+\beta)\leqq1,$$

wherein

m is the valency of M, provided that α, p, q, r and s are not simultaneously 0; and

or a component (b) obtained by reacting an organomagnesium component (a) as defined above with at least one electron donor selected from the group consisting of an ether, a thioether, a ketone, an aldehyde, a carboxylic acid or a derivative thereof, an alcohol, a thioalcohol and an amine;

(II) reacting said solid (1) with at least one electron-donative compound (iii) thereby to form a solid (2), said compound (iii) being employed in an amount of 0.05 to 20 moles per mole of the C-Mg bond contained in said solid (1); and

(III) reacting said solid (2) with at least one member (iv) selected from the group consisting of a titanium compound, a vanadium compound, a zirconium compound, a hafnium compound, reaction products obtained by the reaction therebetween, and mixtures thereof, in the presence of an organometallic compound (vi) of at least one metal selected from metals belonging to Groups I, II or III of the Periodic Table, thereby to obtain a solid catalyst component (A);

characterised in that said electron donative compound (iii) is selected from the group consisting of an aldehyde, a silanol, a hydrosiloxane, an alcohol and a thioalcohol.

2. A method according to Claim 1, wherein said compound (iii) is employed in an amount of 0.1 to 10 moles per mole of the C-Mg bond contained in said solid (1).

3. A method according to Claim 1, wherein said compound (iii) is employed in an amount of 0.2 to 8 moles per mole of the C-Mg bond contained in said solid (1).

4. A method according to any one of Claims 1 to 3, wherein said organomagnesium component (a) is represented by the general formula:

$$M_\alpha Mg_\beta R^1_p R^2_q X_r Y_s$$

wherein M is at least one metal selected from the group consisting of Al, B, Zn and Be.

5. A method according to any one of Claims 1 to 4, wherein said organomagnesium component (a) is represented by the general formula:

$$M_\alpha Mg_\beta R^1_p R^2_q X_r Y_s$$

wherein

α is a number greater than 0;

$0.5\leqq\beta/\alpha\leqq10$; and

$0\leqq(r+s)/(\alpha+\beta)\leqq0.8$.

6. A method according to any preceding Claim, wherein said member (iv) is a titanium compound or at least contains a titanium compound.

7. A method according to any preceding Claim, wherein said organometallic compound component (B) consists of an organometallic compound of at least one metal selected from metals belonging to Groups I, II and III of the Periodic Table.

8. A method according to Claim 7, wherein said organometallic compound (B) consists of an organoaluminum compound or a complex containing organomagnesium.

9. A method according to any preceding Claim, which further comprises treating said solid catalyst component (A) with at least one compound (v) selected from the group consisting of a titanium tetrahalide, an aluminum halide, a silicon halide and a tin halide.

10. A method according to any preceding Claim, wherein said component (i) is reacted with said chlorosilane compound (ii) in the presence of an inorganic support comprising at least one member selected from the group consisting of inorganic oxides, inorganic carbonates, inorganic silicates, inorganic sulfates, inorganic hydroxides, double salts thereof, solid solutions thereof and mixtures thereof.

11. A method according to any preceding Claim, wherein $R^1$, $R^2$ and $R^9$ each independently represent a group selected from alkyl groups, cycloalkyl groups and aryl groups and $R^3$, $R^4$, $R^5$, $R^6$, $R^7$ and $R^8$ each independently represent a hydrogen atom or a group selected from alkyl groups, cycloalkyl groups and aryl groups.

12. A method according to Claim 11, wherein $R^1$ is an alkyl group.

13. A method according to any preceding Claim, wherein $R^{10}$ represents a group selected from aliphatic hydrocarbon groups, alicyclic hydrocarbon groups and aromatic hydrocarbon groups.

**Patentansprüche**

1. Verfahren zur Polymerisation eines Olefins, bei dem ein Olefin mit einem Katalysator in Kontakt gebracht wird, der eine feste Katalysatorkomponente (A) und eine Organometallverbindung als Komponente (B) enthält, wobei die feste Katalysatorkomponente (A) durch ein Verfahren erhalten wird, welches folgende Stufen umfaßt:

(I) Umsetzen von einem Mol einer Komponente (i) mit 0,01 bis 100 Mol einer Chlorsilanverbindung (ii), die eine H-Si-Bindung aufweist und durch die allgemeine Formel

$$H_aSiCl_bR^{10}_{4-(a+b)}$$

dargestellt wird, in der

$0<a\leqq 2$;

b eine Zahl von mehr als 0 ist;

$a+b\leqq 4$ und

$R^{10}$ ein Kohlenwasserstoffrest mit 1 bis 10 Kohlenstoffatomen ist,

so daß ein Feststoff (1), der eine C-Mg-Bindung aufweist, gebildet wird,

wobei die Komponente (i) entweder eine Organomagnesium-Komponente (a), dargestellt durch die allgemeine Formel

$$M_\alpha Mg_\beta R^1_p R^2_q X_r Y_s$$

in der

M mindestens ein Metall ist, das aus der aus Al, Zn, B, Be und Li bestehenden Gruppe ausgewählt ist;

$R^1$ und $R^2$ jeweils unabhängig voneinander einen Kohlenwasserstoffrest mit 1 bis 10 Kohlenstoffatomen darstellen;

X und Y jeweils unabhängig voneinander eine unter $OR^3$, $OSiR^4R^5R^6$, $NR^7R^8$, $SR^9$ und Halogen ausgewählte Gruppe darstellen, worin $R^3$, $R^4$, $R^5$, $R^6$, $R^7$ und $R^8$ jeweils unabhängig voneinander ein Wasserstoffatom oder einen Kohlenwasserstoffrest mit 1 bis 10 Kohlenstoffatomen bedeuten und $R^9$ ein Kohlenwasserstoffrest mit 1 bis 10 Kohlenstoffatomen ist;

$\alpha$ für 0 oder eine Zahl größer als 0 steht;

$\beta$ eine Zahl größer 0 ist und

p, q, r und s jeweils 0 oder eine Zahl größer als 0 sind und den nachstehenden Zusammenhängen genügen:

$$p+q+r+s=m\alpha+2\beta$$

und

$$0\leqq(r+s)/(\alpha+\beta)\leqq 1,$$

worin m die Wertigkeit von M ist, mit der Maßgabe, daß nicht α, p, q, r und s gleichzeitig 0 sind;

oder eine Komponente (b), erhalten durch Umsetzen einer wie vorstehend definierten Organomagnesium - Komponente (a) mit mindestens einem Elektronendonor, der aus der aus einem Ether, einem Thioether, einem Keton, einem Aldehyd, einer Carbonsäure oder einem Derivat davon, einem Alkohol, einem Thioalkohol und einem Amin bestehenden Gruppe ausgewählt ist, darstellt;

(II) Umsetzen dieses Feststoffes (1) mit mindestens einer Elektronen abgebenden Verbindung (iii) unter Bildung eines Feststoffes (2), wobei die Verbindung (iii) in einer Menge von 0,05 bis 20 Mol pro Mol der C-Mg-Bindung, die in dem Feststoff (1) vorhanden ist, eingesetzt wird; und

(III) Umsetzen dieses Feststoffes (2) mit mindestens einer Spezies (iv), die aus der aus einer Titanverbindung, einer Vanadiumverbindung, einer Zirkoniumverbindung, einer Hafniumverbindung, Reaktionsprodukten, die durch Reaktion dieser Verbindungen untereinander erhalten werden, und Gemischen dieser Verbindungen bestehenden Gruppe ausgewählt ist, in Gegenwart einer Organometallverbindung (vi) mindestens eines Metalls, das den Gruppen I, II oder III des Periodensystems angehört, wobei eine feste Katalysatorkomponente (A) erhalten wird,

dadurch gekennzeichnet, daß die Elektronen abgebende Verbindung (iii) aus der aus einem Aldehyd, Silanol, Hydrosiloxan, Alkohol und einem Thioalkohol bestehenden Gruppe ausgewählt wird.

2. Verfahren nach Anspruch 1, bei dem die Verbindung (iii) in einer Menge von 0,1 bis 10 Mol pro Mol der in dem Feststoff (1) vorhandenen C-Mg-Bindung eingesetzt wird.

3. Verfahren nach Anspruch 1, bei dem die Verbindung (iii) in einer Menge von 0,2 bis 8 Mol pro Mol der in dem Feststoff (1) vorhandenen C-Mg-Bindung eingesetzt wird.

4. Verfahren nach einem der Ansprüche 1 bis 3, bei dem die Organomagnesium-Komponente (a) durch die allgemeine Formel

$$M_\alpha Mg_\beta R^1_p R^2_q X_r Y_s$$

dargestellt wird, worin M mindestens ein aus der aus Al, B, Zn und Be bestehenden Gruppe ausgewähltes Metall ist.

5. Verfahren nach einem der Ansprüche 1 bis 4, bei dem die Organomagnesium-Komponente (a) durch die allgemeine Formel

$$M_\alpha Mg\beta R^1_p R^2_q X_r Y_s$$

dargestellt wird, worin

α eine Zahl größer als 0 ist,

$0{,}5 \leqq \beta/\alpha \leqq 10$, und

$0 \leqq (r+s)/(\alpha+\beta) \leqq 0{,}8$.

6. Verfahren nach einem der vorhergehenden Patentansprüche, worin die Spezies (iv) eine Titanverbindung ist oder mindestens eine Titanverbindung enthält.

7. Verfahren nach einem der vorhergehenden Ansprüche, worin die Organometallverbindung als Komponente (B) aus einer Organometallverbindung mindestens eines unter Metallen der Gruppe I, II und III des Periodensystems ausgewählten Metalls besteht.

8. Verfahren nach Anspruch 7, worin die Organometallverbindung (B) aus einer Organoaluminiumverbindung oder einem Organomagnesium enthaltenden Komplex besteht.

9. Verfahren nach einem der vorhergehenden Ansprüche, welches zusätzlich eine Behandlung der festen Katalysatorkomponente (A) mit mindestens einer Verbindung (v) umfaßt, die aus der aus Titantetrahalogenid, Aluminiumhalogenid, Siliciumhalogenid und Zinnhalogenid bestehenden Gruppe ausgewählt ist.

10. Verfahren nach einem der vorhergehenden Ansprüche, bei dem die Komponente (i) mit der Chlorsilanverbindung (ii) in Gegenwart eines anorganischen Trägermaterials umgesetzt wird, das mindestens ein aus der Gruppe der anorganischen Oxide, anorganischen Carbonate, anorganischen Silicate, anorganischen Sulfate, anorganischen Hydroxide, Doppelsalze davon, festen Lösungen davon und Gemischen davon ausgewähltes Glied enthält.

11. Verfahren nach einem der vorhergehenden Ansprüche, wobei $R^1$, $R^2$ und $R^9$ jeweils unabhängig voneinander eine unter Alkylgruppen, Cycloalkylgruppen und Arylgruppen ausgewählte Gruppe darstellen und $R^3$, $R^4$, $R^5$, $R^6$, $R^7$ und $R^8$ jeweils unabhängig ein Wasserstoffatom oder eine unter Alkylgruppen, Cycloalkylgruppen und Arylgruppen ausgewählt Gruppe darstellen.

12. Verfahren nach Anspruch 11, bei dem $R^1$ eine Alkylgruppe ist.

13. Verfahren nach einem der vorhergehenden Ansprüche, wobei $R^{10}$ eine Gruppe darstellt, die unter aliphatischen Kohlenwasserstoffgruppen, alicyclischen Kohlenwasserstoffgruppen und aromatischen Kohlenwasserstoffgruppen ausgewählt ist.

**Revendications**

1. Procédé de polymérisation d'une oléfine qui consiste à mettre une oléfine en contact avec un catalyseur consistant en un constituant solide de catalyseur (A) et en un constituant à base d'un composé organométallique (B),

le constituant solide de catalyseur (A) étant obtenu par un procédé qui consiste:

(I) à faire réagir une mole d'un constituant (i) sur de 0,1 à 100 moles d'un chlorosilane (ii) contenant une liaison H-Si et représenté par la formule générale:

$$H_aSiCl_bR^{10}_{4-(a+b)}$$

dans laquelle

$0<a\leq 2$;

b est un nombre supérieur à 0;

$a+b\leq 4$; et

$R^{10}$ est un radical hydrocarboné ayant de 1 à 10 atomes de carbone,

pour former un solide (1) contenant une liaison C-Mg; ce constituant (i) étant soit un constituant organomagnésien (a) représenté par la formule générale:

$$M_\alpha Mg_\beta R^1_p R^2_q X_r Y_s$$

dans laquelle

M est au moins un métal choisi parmi Al, Zn, B, Be et Li;

$R^1$ et $R^2$ représentent chacun indépendamment un radical hydrocarboné ayant de 1 à 10 atomes de carbone;

X et Y représentent chacun indépendamment un groupe choisi parmi $OR^3$, $OSiR^4R^5R^6$, $NR^7R^8$, $SR^9$ et halogène dans lesquels $R^3$, $R^4$, $R^5$, $R^6$, $R^7$ et $R^8$ représentent chacun indépendamment un atome d'hydrogène ou un radical hydrocarboné ayant de 1 à 10 atomes de carbone, et $R^9$ est un radical hydrocarboné ayant de 1 à 10 atomes de carbone;

α est 0 ou un nombre supérieur à 0;

β est un nombre supérieur à 0; et

p, q, r et s sont chacun 0 ou un nombre supérieur à 0 et satisfont aux relations suivantes:

$$p+q+r+s=m\alpha+2\beta$$

et

$$0\leq(r+s)/(\alpha+\beta)\leq 1,$$

dans lesquelles

m est la valence de M pourvu que α, p, q, r et s ne soient pas simultanément 0; et

soit un constituant (b) obtenu en faisant réagir un constituant organomagnésien (a) tel que défini ci-dessus, sur au moins un donneur d'électron choisi parmi un éther, un thioéther, une cétone, un aldéhyde, un acide carboxylique ou l'un de ses dérivé, un alcool, un thioalcool et une amine;

(II) à faire réagir ce produit solide (1) sur au moins un composé donneur d'électrons (iii), pour former un produit solide (2), le composé (iii) étant utilisé en une quantité de 0,05 à 20 moles par mole de la liaison C-Mg contenue dans le produit solide (1); et

(III) à faire réagir ce produit solide (2) sur au moins un élément (iv) choisi parmi un composé de titane, un composé de vanadium, un composé de zirconium, un composé d'hafnium, les produits de réaction obtenus par leur réaction mutuelle et leurs mélanges, en la présence d'un composé organométallique (vi) d'au moins un métal choisi parmi ceux appartenant aux groupes I, II ou III de la classification périodique des éléments, de manière à obtenir un constituant solide de catalyseur (A);

caractérisé en ce que le composé donneur d'électrons (iii) est choisi parmi un aldéhyde, un silanol, un hydrosiloxane, un alcool et un thioalcool.

2. Procédé suivant la revendication 1, qui consiste à utiliser le composé (iii) en une quantité de 0,1 à 10 moles par mole de la liaison C-Mg contenue dans le produit solide (1).

3. Procédé suivant la revendication 1, qui consiste à utiliser le composé (iii) en une quantité de 0,2 à 8 moles par mole de la liaison C-Mg contenue dans le produit solide (1).

4. Procédé suivant l'une quelconque des revendications 1 à 3, dans lequel le constituant organomagnésien (a) est représenté par la formule générale:

$$M_\alpha Mg_\beta R^1_p R^2_q X_r Y_s$$

dans laquelle M est au moins un métal choisi parmi Al, B, Zn et Be.

5. Procédé suivant l'une quelconque des revendications 1 à 4, dans lequel le constituant organomagnésien (a) est représenté par la formule générale:

$$M_\alpha Mg_\beta R^1_p R^2_q X_r Y_s$$

dans laquelle

α est un nombre supérieur à 0;

$0,5\leq\beta/\alpha\leq 10$; et

$0\leq(r+s)/(\alpha+\beta)\leq 0,8$.

6. Procédé suivant l'une quelconque des revendications précédentes, dans lequel l'élément (iv) est un composé de titane ou contient au moins un composé de titane.

7. Procédé suivant l'une quelconque des revendications précédentes, dans lequel le constituant à base d'un composé organométallique (B) consiste en un composé organométallique d'au moins un métal choisi parmi les métaux appartenant aux groupes I, II et III de la classification périodique des éléments.

8. Procédé suivant la revendication 7, dans lequel le composé organométallique (B) consiste en un composé organoaluminique ou en un complexe contenant un organomagnésien.

9. Procédé suivant l'une quelconque des revendications précédentes, qui consiste en outre à traiter le constituant solide de catalyseur (A) par au moins un composé (v) choisi parmi un tétrahalogénure de titane, un halogénure d'aluminium, un halogénure de silicium et un halogénure d'étain.

10. Procédé suivant l'une quelconque des revendications précédentes, qui consiste à faire réagir le constituant (i) sur le chlorosilane (ii) en la présence d'un support minéral comprenant au moins un élément choisi parmi les oxydes minéraux, les carbonates minéraux, les silicates minéraux, les sulfates minéraux, les hydroxydes minéraux, leurs sels doubles, leurs solutions solides et leurs mélanges.

11. Procédé suivant l'une quelconque des revendications précédentes, dans lequel $R^1$, $R^2$ et $R^9$ représentent chacun indépendamment un groupe choisi parmi les groupes alcoyle, les groupes cycloalcoyle et les groupes aryle et $R^3$, $R^4$ $R^5$, $R^6$, $R^7$ et $R^8$ représentent chacun indépendamment un atome d'hydrogène ou un groupe choisi parmi les groupes alcoyle, les groupes cycloalcoyle et les groupes aryle.

12. Procédé suivant la revendication 11, dans lequel $R^1$ est un groupe alcoyle.

13. Procédé suivant l'une quelconque des revendications précédentes, dans lequel $R^{10}$ représente un groupe choisi parmi les groupes hydrocarbonés aliphatiques, les groupes hydrocarbonés alicycliques et les groupes hydrocarbonés aromatiques.